# EUROPÄISCHE PATENTSCHRIFT

(11) **EP 4 378 651 B1**
(45) Veröffentlichungstag und Bekanntmachung des Hinweises auf die Patenterteilung: **12.08.2026**
(21) Anmeldenummer: 22210253.5
(22) Anmeldetag: 29.11.2022
(51) Int. Cl.: B27N 3/00, B27N 3/02, B27N 3/04, B27N 7/00, B27N 1/02, B32B 21/02, B32B 21/04, B32B 21/13, C08L 97/02, C08L 99/00, C09J 103/02, E04C 2/16, B44C 5/04, B27N 3/08, B27N 1/00

(54) **HOLZWERKSTOFFPLATTE UND VERFAHREN ZU DEREN HERSTELLUNG**
WOOD MATERIAL BOARD AND METHOD FOR THE PRODUCTION THEREOF
PLAQUE EN MATÉRIAU DÉRIVÉ DU BOIS ET SON PROCÉDÉ DE FABRICATION

(43) Veröffentlichungstag der Anmeldung: 05.06.2024
(73) Patentinhaber: Pfleiderer Deutschland GmbH, 92318 Neumarkt (DE)
(72) Erfinder: MÜLLER, Jens, 92318 Neumarkt (DE); GRÜNBECK, Benjamin, 92318 Neumarkt (DE)
(74) Vertreter: Freiherr von Foullon, Alexander

(56) Entgegenhaltungen:
- EP-A1- 3 733 367
- WO-A1-2021/101396
- US-A1- 2010 279 137
- US-A1- 2015 210 904
- US-A1- 2020 017 688

## Beschreibung

Die vorliegende Erfindung betrifft das technische Gebiet der Holzwerkstoffe.

Insbesondere betrifft die vorliegende Erfindung eine Holzwerkstoffplatte mit einem mindestens zweischichtigen Aufbau.

Darüber hinaus betrifft die vorliegende Erfindung eine Spanplatte, eine Faserplatte, eine OSB-Platte, und eine Verbundplatte, je auf Basis der Holzwerkstoffplatte nach der vorliegenden Erfindung.

Schließlich betrifft die vorliegende Erfindung ein Verfahren zur Herstellung einer Holzwerkstoffplatte nach der vorliegenden Erfindung.

Holzwerkstoffplatten, wie etwa Spanplatten, OSB-Platten oder auch Holzfaserplatten, werden bereits seit einigen Jahrzehnten intensiv im Innenausbau sowie im Möbelbau verwendet. Holzwerkstoffplatten sind weniger stabil als Vollholz. Sie weisen aufgrund ihrer Struktur, d.h. infolge des Zerkleinerns des Vollholzes und des erneuten Zusammenfügens der Holzteilchen, jedoch z.B. bessere Dämmeigenschaften als Vollholz auf und quellen in Gegenwart von Feuchtigkeit nicht. auf Die Eigenschaften des Holzes, die in Abhängigkeit von der Faserrichtung bestehen, sowie das Quell - und Schwundverhalten des Holzes bei Feuchtigkeit oder Trockenheit werden in der Holzwerkstoffplatte durch die Zerkleinerung und das erneute Zusammenfügen ausgeglichen.

Darüber hinaus können Holzwerkstoffplatten mit verschiedenen Eigenschaften ausgerüstet und mit weiteren, bspw. dekorativen, Lagen kombiniert werden. So gibt es etwa fungizid-resistente oder feuchtigkeitsbeständige Platten ebenso wie vielfältig gestaltbare dekorative Platten für den Möbelbau.

Verwendet werden Holzwerkstoffplatten je nach Typ beim Trockenbau zum Erstellen von Innen- oder Außenwänden, als Stützen-, Balken-, Decken- und Dachschrägenbekleidung oder als Trockenestriche und Fußböden. Je nach Platteneigenschaften und Konstruktion werden Holzwerkstoffplatten für nicht tragende, aussteifende oder auch tragende Bauteile genutzt.

Auch im Möbelbau bietet sich die Verwendung von Holzwerkstoffplatten aus verschiedenen Gründen an. Massivholz in Form von Vollholz ist im Hinblick auf die Möglichkeit des Verzugs oder der Rissbildung des Holzes nicht für alle Anwendungen geeignet. Auch sind Möbel aus Holzwerkstoffen in der Regel deutlich günstiger als Massivholzmöbel aus Vollholz.

Darüber hinaus stellen Holzwerkstoffe bzw. deren Verarbeitung zu Holzwerkstoffplatten auch eine Form einer wirtschaftlichen Holzverarbeitung dar, da ein wesentlicher Teil der Platten aus Abfall- bzw. Koppelprodukten der Holzbe- und -verarbeitung in Form von Holzspänen oder -fasern, die sich ansonsten kaum wirtschaftlich sinnvoll nutzen lassen, besteht.

Neben einem Holzwerkstoff, etwa Holzspänen oder -fasern, wird für die Herstellung von Holzwerkstoffplatten ein Bindemittel, klassischerweise auch Leim genannt, benötigt. Vereinfacht umfasst die Herstellung einer Holzwerkstoffplatte dabei mehrere Schritte. Zunächst wird mittels Hacker und Zerspaner der Holzwerkstoff zubereitet, etwa in Form von Spänen. Für die Beleimung bzw. das Versetzen mit dem Bindemittel und das anschließende Pressen muss der Holzwerkstoff eine erforderliche Sollfeuchte aufweisen, was in der Regel einen Trocknungsschritt notwendig macht. Der Ablauf des Trocknungsschrittes ist dabei von den Parametern Holzart, Spanabmessung, Rohdichte und Eingangsfeuchte abhängig.

Nach der Trocknung wird der Holzwerkstoff maschinell geschichtet. Durch die Schichtung kann der Holzwerkstoff seinem Einsatz entsprechend beleimt bzw. mit dem Bindemittel versetzt werden. Das Beleimen umfasst dabei die Prozessstufen: Herstellen des Bindemittels bzw. der Leimflotte, Dosierung des Holzwerkstoffs sowie Bindemittelauftrag und Vermischen von Holzwerkstoff und Bindemittel.

Nachdem der Holzwerkstoff mit dem Bindemittel gemischt, d.h. beleimt, ist, wird diese Mischung zu einem Vlies gestreut. Dieses wird unter Einwirkung von Druck und hoher Temperaturen zu Platten verpresst. Alte Pressen sind als Ein- oder Mehretagenpressen ausgeführt, während moderne Systeme in kontinuierlicher Arbeitsweise arbeiten. Nach dem Pressen werden die Platten abschließend konditioniert (Lagerung über eine Woche, um Feuchtigkeit und Wärme in der Platte auszugleichen), besäumt und geschliffen.

Als Bindemittel für Holzwerkstoffplatten dienen vor allem Systeme aus verschiedenen Kombinationen von Harnstoff-, Melamin- und Phenol-Formaldehyd-Bindemitteln. Die Bindemittel zeichnen sich durch eine unterschiedliche Wasser- und Heißwasserbeständigkeit aus und bestimmen damit die Langlebigkeit der Holzwerkstoffplatte.

Der einfachste und häufigste Typ von Holzwerkstoffplatten wird dabei mit Harnstoff-Formaldehyd-Bindemittel gefertigt, kurz UF-Bindemittel oder auch -Klebstoff. Für quellbeständige Holzwerkstoffplatten werden melaminhaltige Harnstoff-Bindemittel, kurz MUF-Bindemittel oder auch -Klebstoffe (M für Melamin), eingesetzt.

Ein Nachteil der vorgenannten Bindemittel ist der Formaldehydgehalt. Zwar befindet sich in der fertig gestellten Holzwerkstoffplatte ein eher geringer Anteil an Bindemittel im Holzwerkstoff. Dennoch ist dieser geringe Anteil bei der Schadstoffentwicklung relevant, denn während das Bindemittel aushärtet, wird unter anderem Formaldehyd freigesetzt. Formaldehyd kann bei unsachgemäßer Anwendung Allergien, Haut-, Atemwegs- oder Augenreizungen verursachen. Bei chronischer Exposition kann Formaldehyd auch das Gedächtnis, die Konzentrationsfähigkeit und den Schlaf beeinträchtigen. Seit dem 1. April 2015 ist Formaldehyd als "wahrscheinlich karzinogen beim Menschen" eingestuft.

Entsprechend ist es im Zusammenhang mit der Herstellung sowie Verwendung von Holzwerkstoffplatten eine Bestrebung, die Belastung mit Formaldehyd so gering wie möglich zu halten bzw. kontinuierlich zu minimieren, um gesundheitliche Risiken abzuwenden. Diesbezüglich regelt in Deutschland die Chemikalien-Verbotsverordnung, dass beschichtete und unbeschichtete Holzwerkstoffe (Spanplatten, Tischlerplatten, Furnierplatten und Faserplatten) vor dem Inverkehrbringen auf austretendes Formaldehyd geprüft werden müssen. Hierbei gilt, dass die durch den Holzwerkstoff verursachte Ausgleichskonzentration des Formaldehyds von 0,1 ml/m³ (entspricht 0,1 ppm bzw. 124 µg/m³) in der Luft eines Prüfraums nicht überschritten werden soll. In Deutschland und in der EU hergestellte und verkaufte Möbel halten diese Emissionsbedingungen, durch die Bezeichnung "emissionsarm E 1" kenntlich gemacht, im Allgemeinen ein.

Dennoch kann es sein, dass in der Praxis eine abweichende und insbesondere erhöhte Formaldehyd-Emission auftritt, etwa in Räumen mit hochdichten Fenstern und einer entsprechend geringeren Raumluftwechselrate, oder aufgrund einer höheren Raumbeladung, indem beispielsweise in einem kleinen Raum eine hohe Anzahl von Möbeln mit Elementen auf Basis von Holzwerkstoffplatten untergebracht ist. Eine stellenweise erhöhte Exposition gegenüber Formaldehyd kann somit nicht gänzlich ausgeschlossen werden.

Ein anderer Aspekt, der im Hinblick auf die intensive Nutzung von Holzwerkstoffplatten zu berücksichtigen ist, ist die Notwendigkeit einer wirtschaftlichen sowie effizienten Herstellung von Holzwerkstoffplatten.

In diesem Zusammenhang zu berücksichtigen ist etwa der Kostenaspekt für die verwendeten Materialien, insbesondere das eingesetzte Bindemittel, sowie andererseits der Aspekt einer insbesondere zeiteffizienten Herstellung der Holzwerkstoffplatten. Ein kostenaufwendiges Bindemittel etwa, dass zudem längere Aushärtezeiten erfordert, führt zu längeren Produktionszeiten sowie insgesamt zu steigenden Kosten und damit Preisen für die Holzwerkstoffplatte, die weitergegeben werden an den Abnehmer sowie schließlich an den Endverbraucher. Vor allem die derzeit verfügbaren Formaldehyd-freien Bindemittel gehen mit diesem Nachteil einher.

So sind mittlerweile formaldehydfreie proteinbasierte Bindemittelsysteme erhältlich, die jedoch deutlich längere Abbindezeiten aufweisen, sodass die Prozesszeiten verlängert und die so hergestellten Holzwerkstoffplatten wirtschaftlich nicht konkurrenzfähig sind.

Außerdem ist auch zu gewährleisten, dass die erzeugten Platten eine hinreichende Stabilität und Dauerhaftigkeit bzw. Haltbarkeit aufweisen, was vor allem durch das verwendete Bindemittel maßgeblich bestimmt wird. In diesem Punkt ist allerdings eine Vielzahl der derzeit verfügbaren Formaldehyd-freien Bindemitteln den Formaldehydharzen unterlegen, was die Verwendung von Formaldehydharzen weiterhin attraktiv sowie teilweise auch alternativlos erscheinen lässt.

Es mangelt im Stand der Technik also weiterhin an einer wirkungsvollen Lösung, möglichst Formaldehyd-freie, zumindest aber Formaldehyd-arme, Holzwerkstoffplatten bereitzustellen, die einerseits sowohl wirtschaftlich als auch effizient und damit kostengünstig hergestellt werden können sowie andererseits auch eine hinreichende Stabilität und Haltbarkeit über mehrere Jahre hinweg versprechen. US2010279137A1 offenbart den Oberbegriff des Anspruchs 1.

Der vorliegenden Erfindung liegt daher die Aufgabe zugrunde, die zuvor genannten, mit dem Stand der Technik verbundenen Nachteile auszuräumen, diese zumindest jedoch abzuschwächen.

Insbesondere ist es eine Aufgabe der vorliegenden Erfindung eine Holzwerkstoffplatte bereitzustellen, welche sich durch vorteilhafte mechanische Eigenschaften auszeichnet, sowie darüber hinaus mit einer gesenkten oder verminderten Formaldehyd-Emission einhergeht.

Auch ist es eine Aufgabe der vorliegenden Erfindung ein Herstellungsverfahren für eine Holzwerkstoffplatte zu liefern, das zeiteffizient durchgeführt werden kann und von kostengünstigen Ausgangsstoffen ausgeht, so dass eine preisgünstige Holzwerkstoffplatte mit niedrigen Formaldehyd-Emissionswerten erhalten wird.

Diese Aufgabe wird erfindungsgemäß gemäß einem ersten Aspekt der vorliegenden Erfindung durch eine Holzwerkstoffplatte nach Anspruch 1 gelöst; weitere vorteilhafte Ausgestaltungen des erfindungsgemäßen Holzwerkstoffplatte sind Gegenstand der diesbezüglichen Unteransprüche.

Ein weiterer Gegenstand der vorliegenden Erfindung gemäß einem zweiten Aspekt der vorliegenden Erfindung ist eine Spanplatte nach Anspruch 11.

Wiederum weiterer Gegenstand der vorliegenden Erfindung gemäß einem dritten Aspekt der vorliegenden Erfindung ist eine Faserplatte nach Anspruch 12.

Darüber hinaus Gegenstand der vorliegenden Erfindung gemäß einem vierten Aspekt der vorliegenden Erfindung ist eine OSB-Platte nach Anspruch 13.

Zudem Gegenstand der vorliegenden Erfindung gemäß einem fünften Aspekt der vorliegenden Erfindung ist eine Verbundplatte nach 14.

Schließlich Gegenstand der vorliegenden Erfindung gemäß einem sechsten Aspekt der vorliegenden Erfindung ist ein Verfahren zur Herstellung einer Holzwerkstoffplatte nach der vorliegenden Erfindung nach Anspruch 15.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren; dies versteht sich jedoch von selbst.

Dies vorausgeschickt, wird im Folgenden die vorliegende Erfindung eingehender beschrieben.

Gegenstand der vorliegenden Erfindung - gemäß einem **ersten** Aspekt der vorliegenden Erfindung - ist eine Holzwerkstoffplatte gemäß Anspruch 1.

Denn, wie die Anmelderin überraschenderweise herausgefunden hat, zeichnet sich die erfindungsgemäße Holzwerkstoffplatte auf Basis der Verwendung eines biogene Hauptkomponenten enthaltenden Bindemittels durch eine unter Umwelt- und Gesundheitsaspekten optimierte Zusammensetzung aus. Der Anteil auf natürlichen bzw. organischen Quellen basierender Inhaltsstoffe ist in der erfindungsgemäßen Platte gegenüber bekannten Platten des Standes der Technik deutlich gesteigert.

Damit wird gleichermaßen eine signifikante Reduktion von chemisch-erzeugten Bestandteilen erreicht. Die erfindungsgemäße Holzwerkstoffplatte leistet damit einen als positiv zu bewertenden Beitrag zur Bereitstellung nachhaltiger Werkstoffe, die umwelt- und ressourcenschonend erzeugt werden.

Besonders vorteilhaft ist dabei zu bewerten, dass das biogenen Hauptkomponenten enthaltende Bindemittel vorteilhaft ganz überwiegend, insbesondere ausschließlich, biogene Inhaltsstoffe aufweist, so dass im Rahmen der Erfindung ein Bindemittel Verwendung findet, dass als ganz überwiegend frei von fossilen Bestandteilen zu bewerten ist. Weiter vorteilhaft ist das biogenen Hauptkomponenten enthaltende Bindemittel außerdem auch frei von formaldehydhaltigen Bestandteilen. Die erfindungsgemäße Holzwerkstoffplatte kann damit in wesentlichen Teilen also aus Materialen erzeugt werden, die nicht von petrochemischen Grundstoffen ausgehen, was einen nennenswerten Beitrag zum Ressourcen- und Umweltschutz sowie auch eine zukunftsweisende Ausführung einer Holzwerkstoffplatte darstellt. Auch geht mit der erfindungsgemäßen Holzwerkstoffplatte ein reduzierter Schadstoffausstoß einher, was unter Gesundheitsaspekten positiv hervorzuheben ist.

Dabei ist vorteilhaft gewährleistet, dass die erfindungsgemäße Holzwerkstoffplatte im Hinblick auf ihre mechanischen Eigenschaften, ihre Haltbarkeit, Stabilität und Robustheit sowie ihre Belastbarkeit konventionellen Platten gegenüber mindestens gleichwertig ist. Der Einsatz von biogenen Hauptkomponenten enthaltenden Bindemitteln geht also nicht mit Einbußen im Hinblick auf die Eigenschaften der erfindungsgemäßen Holzwerkstoffplatte einher.

Auch die Herstellung der erfindungsgemäßen Holzwerkstoffplatte kann im gleichen Maße wirtschaftlich vorgenommen werden, wie die Herstellung konventioneller Holzwerkstoffplatten. Häufig geht ein Austausch von Bindemitteln mit Einbußen im Hinblick auf Prozesszeiten, insbesondere in Bezug auf das Aushärten des Bindemittels, einher. Dies ist im Rahmen der vorliegenden Erfindung nicht der Fall. Vielmehr garantiert die Kombination aus einem ersten, biogene Hauptkomponenten enthaltenden Bindemittel und einem zweiten, von dem ersten Bindemittel unterschiedlichen, Bindemittel die wirtschaftliche und insbesondere zeiteffiziente Erzeugung von erfindungsgemäßen Holzwerkstoffplatten, wobei insbesondere das Aushärten bzw. Trocknen der Bindemittel gleiche Prozesszeiten in Anspruch nimmt, wie es im Falle von konventionellen Holzwerkstoffplatten der Fall ist.

Vorteilhaft ist dabei erfindungsgemäß vorgesehen, dass die biogenen Hauptkomponenten bzw. das biogenen Hauptkomponenten enthaltende Bindemittel insgesamt von leicht zu beschaffenden Rohstoffen und insbesondere als Kopplungs- bzw. Abfallprodukten anfallenden Stoffen ausgeht, so dass mit der vorliegenden Erfindung ein Beitrag zur Wertschöpfung bzw. besseren Verwertung von Rohstoffen bzw. Abfallprodukten geleistet wird. Gleichmaßen kann auf diese Weise ein kosteneffizientes Erzeugnis bereitgestellt werden.

Schließlich ermöglicht die Verwendung des biogenen Hauptkomponenten enthaltenden Bindemittels in der erfindungsgemäßen Holzwerkstoffplatte auch die Bereitstellung einer Holzwerkstoffplatte mit einer reduzierten Formaldehyd-Emission bzw. -Freisetzung, was unter Gesundheits- und Umweltschutzaspekten ebenfalls hervorzuheben ist. Auf Basis der erfindungsgemäßen Holzwerkstoffplatte können also emissionsarme Konstruktionen, die zu einem guten und unbedenklichen Wohn- bzw. Raumklima beitragen, realisiert werden.

Erfindungsgemäß wird dabei unter einem Holzwerkstoff ein Werkstoff in Form eines Span- oder auch Fasermaterials verstanden, welches auf der Basis von Holz oder holzartigen Materialien, d.h. im Wesentlichen lignocellulosehaltige Materialien, gebildet ist. Holzartige Materialien sind dabei bspw. unter anderem Stroh, Flachs, Hanf oder auch Bagasse. Vorteilhaft ist der Holzwerkstoff aus Industrieholz (Sägewerks- und Hobelreste), Altholz, Bohr- und Restholz sowie Schwach- und Durchforstungsholz bzw. vergleichbaren holzartigen Materialien erhalten.

Im Rahmen der vorliegenden Erfindung kann es vorgesehen sein, dass die erfindungsgemäße Holzwerkstoffplatte einen einzelnen Holzwerkstoff oder auch eine Mischung verschiedener Holzwerkstoffe enthält. Wenn die Holzwerkstoffplatte eine Mischung verschiedener Holzwerkstoffe entsprechend der vorgenannten Definition enthält, so umfasst dies sowohl die Fälle, bei denen innerhalb der Schichten der Holzwerkstoffplatte eine Mischung verschiedener Holzwerkstoffe verwendet wird, als auch die Fälle, in denen sich der Holzwerkstoff von Schicht zu Schicht unterscheidet. Im Hinblick auf die Unterschiede zwischen den verwendeten Holzwerkstoffmaterialien können sich diese sowohl auf das Material bzw. dessen Ursprung als auch die Beschaffenheit des Materials, d.h. beispielsweise die Span- oder Fasergröße, beziehen. Unterschiedliche Ursprünge meine dabei etwa die konkrete Holzsorte, können sich aber auch darauf beziehen, ob Altholz oder frisches Holz verwendet wird.

Erfindungsgemäß wird unter einer Schicht eine flächig ausgebildete Lage verstanden, innerhalb welcher mindestens ein Holzwerkstoff und mindestens ein Bindemittel enthalten sind, wobei sich die Schichten bzw. Lagen dadurch auszeichnen, dass innerhalb der jeweiligen Schicht eine im Wesentlichen gleiche Zusammensetzung der Schicht, insbesondere in Bezug auf die Schichtbestandteile, vorliegt. Bezogen auf die Holzwerkstoffplatte insgesamt lassen sich die Schichten unterscheiden bzw. sind unterschiedlich ausgebildet. Unterschiede können etwa im Hinblick auf die Zusammensetzung der Schichtbestandteile, d.h. die Wahl des Bindemittels oder auch das Material bzw. die Beschaffenheit des Holzwerkstoffs, bestehen, oder sich auch auf die Eigenschaften, beispielsweise des Bindemittels und/oder des Holzwerkstoffs innerhalb der Schicht beziehen. Weiterhin können sich Unterschiede zwischen den Schichten auch auf Basis der Anordnung der Schichtbestandteile in der Schichten ergeben, etwa im Hinblick auf die Materialdichte bzw. die Materialverteilung in der Schicht.

Unter einem Bindemittel wird im Rahmen der vorliegenden Erfindung eine bindend wirkende Zusammensetzung verstanden. Die bindende Wirkung des Bindemittels beruht dabei regelmäßig auf einer Hauptkomponente, die an Phasengrenzen anderer Stoffe chemische Bindungen herstellen oder begünstigen bzw. Effekte wie Kohäsion, Adsorption und Adhäsion bzw. Reibung auslösen oder vergrößern kann. **In** diesem Sinne ist das Bindemittel dafür vorgesehen, unterschiedliche Stoffe, hier Holzwerkstoffe, miteinander zu verbinden, indem es diese Stoffe aufnimmt, anlagert, zusammenhält, vernetzt oder verklebt. Neben der Hauptkomponente, die maßgeblich für die beschriebene bindende Wirkung des Bindemittels ist, kann die Zusammensetzung des Bindemittels auch weitere Hilfs- bzw. Zusatzstoffe, wie beispielsweise pH-Stellmittel, Entschäumer, Stabilisatoren oder dergleichen sowie gegebenenfalls ein Lösungsmittel enthalten.

Weiter ist im Rahmen der vorliegenden Erfindung unter einer Hauptkomponente, wie bereits in Bezug auf das Bindemittel ausgeführt, ein solche Komponente zu verstehen, die maßgeblicher Bestandteil des Bindemittels ist, einerseits im Hinblick auf den Mengenanteil, sowie andererseits vor allem im Hinblick auf die bindende Wirkung des Bindemittels. Hinsichtlich des Mengenanteils kann dabei davon ausgegangen werden, dass die Hauptkomponente regelmäßig einen Mengenanteil am Bindemittel in einem Bereich von 30 Gew.-% oder mehr ausmacht. **In** Bezug auf die bindende Wirkung des Bindemittels trägt die Hauptkomponente essenziell zu dieser bei, so dass die bindende Wirkung des Bindemittels regelmäßig nur dann entfaltet wird, wenn die Hauptkomponente in dem Bindemittel vorhanden ist.

Unter einer biogenen Hauptkomponente ist im Rahmen der vorliegenden Erfindung eine solche Komponente zu verstehen, die biologischen oder organischen Ursprungs ist und entsprechend nicht durch chemische Syntheseverfahren gewonnen wurde. Es kann jedoch sein, dass die biogene Komponenten durch chemische Verfahren modifiziert ist bzw. chemisch prozessiert wurde. Von der vorliegenden Erfindung sind damit vorteilhaft solche Bindemittel umfasst, deren Hauptkomponente aus natürlichen bzw. organischen Quellen erhalten wurde, ggf. zuzüglich eventueller nachträglicher chemischer Modifikationen.

Was nun die Zusammensetzung der erfindungsgemäßen Holzwerkstoffplatte anbelangt, so hat es sich im Rahmen der vorliegenden Erfindung bewährt, wenn die Holzwerkstoffplatte genau ein biogene Hauptkomponenten enthaltendes Bindemittel enthält.

Erfindungsgemäß enthält mindestens eines der mindestens zwei Bindemittel ausschließlich biogene Hauptkomponenten, und das biogene Hauptkomponenten enthaltende Bindemittel ist in der ersten oder zweiten Schicht der Holzwerkstoffplatte als alleiniges Bindemittel enthalten.

Ein hoher, bzw. insbesondere ausschließlicher, Anteil der biogenen Hauptkomponente an dem Bindemittel, welche vorzugsweise auch ausschließlich biogen ist, ist unter den Aspekten Ressourcenschonung, Nachhaltigkeit sowie sensibler Umgang mit Rohstoffen als vorteilhaft zu bewerten. Ein Bindemittel mit ausschließlich biogenen Hauptkomponenten kommt vorteilhaft mit einem äußerst geringen Anteil bzw. insbesondere ohne Bestandteile auf Basis fossiler Rohstoffe bzw. petrochemischer Grundstoffe aus und verwendet lediglich solche Komponenten, die aus nachwachsenden bzw. nachhaltigen biologischen Quellen stammen. Vorteilhaft fällt die biogene Hauptkomponente auch im Rahmen von Verarbeitungsprozessen, bspw. als Kopplungsprodukt bzw. Abfallprodukt an, so dass eine möglichst vollständige Verwertung des zugrundeliegenden organischen Materials erfolgen kann, was wiederum im Hinblick auf des Aspekt der Wertschöpfungskette positiv zu bewerten ist.

Nicht-biogene Bestandteile des Bindemittels sind vorzugsweise anorganische bzw. mineralische Verbindungen, wie beispielsweise Natriumhydroxid oder Wasserglas.

Insoweit ist im Rahmen der vorliegenden Erfindung bevorzugt vorgesehen, dass das biogene Hauptkomponenten enthaltende Bindemittel keine bindend wirksamen Komponenten chemischen Ursprungs umfasst. Dadurch wird eine Holzwerkstoffplatte erhalten, die zu einem größeren Anteil, als es im Stand der Technik üblicherweise der Fall ist, auf Basis natürlicher bzw. biologischer Komponenten beruht, was insbesondere im Hinblick auf Umweltaspekte als vorteilhaft zu bewerten ist.

Weiterhin hat es sich bewährt, wenn das biogene Hauptkomponenten enthaltende Bindemittel eine Dispersion ist. Wenn im Rahmen der vorliegenden Erfindung eine Bindemitteldispersion verwendet wird, so kann eine effiziente und vollständige Durchmischung von Holzwerkstoff und Bindemittel erreicht werden, so dass auch die bindenden Eigenschaften des Bindemittels ideal hervortreten können. Vorzugsweise ist das Dispersionsmedium Wasser.

Weiter im Hinblick auf die Anordnung der erfindungsgemäßen Holzwerkstoffplatte hat es sich bewährt, wenn das biogene Hauptkomponenten enthaltende Bindemittel, insbesondere ausschließlich, in der ersten oder zweiten Schicht der Holzwerkstoffplatte enthalten ist. Es kann also sein, dass das biogene Hauptkomponenten enthaltende Bindemittel in beiden Schichten der erfindungsgemäßen Holzwerkstoffplatte umfasst ist, oder nur in einer der Schichten.

Der Einsatz des biogene Hauptkomponenten enthaltenden Bindemittels in beiden Schichten der erfindungsgemäßen Holzwerkstoffplatte kann dann vorgesehen sein, wenn der Gehalt des zweiten Bindemittels in der zweiten Schicht bzw. der Holzwerkstoffplatte gesenkt wird, etwa mit dem Hintergrund, das Eigenschaftsprofil der Schichten anzugleichen bzw. einen fließenderen Schichtübergang zu gestalten. Gleichzeitig kann vorteilhaft der Anteil biogener Stoffe bzw. Materialien an der Holzwerkstoffplatte noch weiter gesteigert werden, was unter Umweltaspekten zu begrüßen ist.

Alternativ kann es sich anbieten, nur in der ersten oder zweiten Schicht der Holzwerkstoffplatte das biogene Hauptkomponenten enthaltende Bindemittel vorzusehen. Die Kombination von biogene Hauptkomponenten enthaltendem Bindemittel und zweitem Bindemittel geht vorteilhaft mit guten Herstellungs- und Verarbeitungseigenschaften einher, was einer zeit- und kosteneffizienten Erzeugung der Holzwerkstoffplatte zugutekommt. So wird im Rahmen eines zeit- und kostenoptimierten Herstellungsprozesses eine Holzwerkstoffplatte geliefert, die sich gleichwohl durch im Vergleich zum Stand der Technik positive Umwelt- und Nachhaltigkeitseigenschaften sowie vor allem eine geringere Formaldehyd-Emission auszeichnet.

Erfindungsgemäß kann es demnach vorzugsweise vorgesehen sein, dass die erste Schicht der Holzwerkstoffplatte mindestens einen Holzwerkstoff und ausschließlich das biogene Hauptkomponenten enthaltende Bindemittel aufweist.

Alternativ kann jedoch auch angedacht sein, dass die zweite Schicht der Holzwerkstoffplatte mindestens einen Holzwerkstoff und ausschließlich das biogene Hauptkomponenten enthaltende Bindemittel aufweist.

Erfindungsgemäß hat es sich dabei in Bezug auf die Schichten bewährt, wenn die erste Schicht der Holzwerkstoffplatte als Deckschicht ausgebildet ist. Unter einer Deckschicht wird im Rahmen der vorliegenden Erfindung eine außenliegende Schicht verstanden. In diesem Sinne meint außenliegende Schicht, dass die Deckschicht eine äußere Oberfläche der erfindungsgemäßen Holzwerkstoffplatte bildet. Bezogen auf einen möglichen Anwendungsfall der erfindungsgemäßen Holzwerkstoffplatte, etwa als Konstruktionsbauteil, ist die äußere Oberfläche bzw. Außenseite bspw. eine der Witterung oder zumindest dem Raum zugewandte Seite, die entsprechend durch die Deckschicht gebildet wird.

Weiter hat es sich bewährt, wenn die zweite Schicht der Holzwerkstoffplatte als Mittelschicht ausgebildet ist. Im Rahmen der vorliegenden Erfindung wird unter einer Mittelschicht eine vorzugsweise innenliegende Schicht verstanden, welche insbesondere von der, vorzugsweise als Deckschicht ausgebildeten, ersten Schicht abgedeckt ist. Somit bildet die Mittelschicht vorzugsweise keine Außenfläche bzw. lediglich eine Außenfläche einer im Anwendungsfall innenliegenden bzw. als Innen- oder Unterseite bzw. einer Wand oder einem Untergrund zugewandten Seite ausgebildeten Fläche der erfindungsgemäßen Holzwerkstoffplatte. Die Mittelschicht ist im Anwendungsfall äußeren Einflüssen vorzugsweise also wenig bzw. insbesondere nicht ausgesetzt.

Übertragen auf einen möglichen Anwendungsfall der erfindungsgemäßen Holzwerkstoffplatte für die Montage als Vorwand kann es vorzugsweise also vorgesehen sein, dass die erste Schicht als Deckschicht ausgebildet ist, wobei die Deckschicht auf der von der Wand abgewandten Seite der Holzwerkstoffplatte orientiert ist, und die zweite Schicht als Mittelschicht ausgebildet und als somit vorzugsweise innenliegende Schicht zur Wand hin orientiert angeordnet ist.

Dabei hat es sich für die Konstruktion ebenso für den Materialaufwand in Bezug auf die Erzeugung der erfindungsgemäßen Holzwerkstoffplatte als vorteilhaft erwiesen, wenn der Holzwerkstoff der zweiten, insbesondere als Mittelschicht ausgebildeten, Schicht eine geringere Dichte aufweist als der Holzwerkstoff der ersten, insbesondere als Deckschicht ausgebildeten, Schicht. Der Holzwerkstoff der zweiten Schicht kann dabei im Rahmen der Herstellung der erfindungsgemäßen Holzwerkstoffplatte bspw. gröber gestreut sein, so dass eine weniger dichte Schicht resultiert. Alternativ kann auch ein Holzwerkstoff in der zweiten Schicht verwendet werden, der intrinsisch eine geringere Dichte aufweist als der Holzwerkstoff der ersten Schicht. Insgesamt kann dabei eine gewichts- und materialoptimierte Holzwerkstoffplatte erhalten werden, was sich positiv auf wirtschaftliche Aspekte auswirkt.

Weiter im Hinblick auf die Konstruktion der Holzwerkstoffplatte hat es sich außerdem bewährt, wenn die erste Schicht an der Holzwerkstoffplatte einen Gewichtsanteil in einem Bereich von 5 bis 50 Gew.-%, insbesondere 10 bis 30 Gew.-%, vorzugsweise 15 bis 20 Gew.-%, bezogen auf das Gewicht der Holzwerkstoffplatte aufweist. Der vorgenannte Gewichtsanteil bezieht sich dabei auf das Gewicht einer ersten Schicht an der erfindungsgemäßen Holzwerkstoffplatte. Insofern ist für den Fall, dass die Holzwerkstoffplatte zwei oder mehr erste Schichten umfasst der Gewichtsanteil der ersten Schichten an der Holzwerkstoffplatte entsprechend aufzuaddieren.

Ebenfalls hat es sich im Rahmen der vorliegenden Erfindung bewährt, wenn die zweite Schicht an der Holzwerkstoffplatte einen Gewichtsanteil in einem Bereich von 50 bis 90 Gew.-%, insbesondere 55 bis 80 Gew.-%, vorzugsweise 60 bis 70 Gew.-%, bezogen auf das Gewicht der Holzwerkstoffplatte, aufweist.

Bevorzugt weist die zweite Schicht also einen höheren Gewichtsanteil an der Holzwerkstoffplatte als die erste Schicht auf.

Es hat sich im Rahmen der vorliegenden Erfindung als besonders vorteilhaft erwiesen, wenn die Holzwerkstoffplatte derart gestaltet ist, dass die Holzwerkstoffplatte einen mindestens dreischichtigen Aufbau aufweist, wobei die Holzwerkstoffplatte zwei, insbesondere als Deckschichten ausgebildete, erste Schichten umfasst.

Noch weiter bevorzugt ist es in diesem Zusammenhang, wenn die zwei, insbesondere als Deckschichten ausgebildeten, ersten Schichten die, insbesondere als Mittelschicht ausgebildete, zweite Schicht sowie gegebenenfalls weitere Schichten der Holzwerkstoffplatte einfassen.

Im Rahmen einer besonders bevorzugten Ausführung der erfindungsgemäßen Holzwerkstoffplatte ist schließlich vorgesehen, dass die Holzwerkstoffplatte einen dreischichtigen Aufbau aufweist, wobei die Holzwerkstoffplatte zwei, insbesondere als Deckschichten ausgebildete, erste Schichten und eine, insbesondere als Mittelschicht ausgebildete, zweite Schicht umfasst.

Ein derartiger Aufbau der erfindungsgemäßen Holzwerkstoffplatte hat sich als besonders vorteilhaft herausgestellt, da so gewichts- und materialoptimiert eine Holzwerkstoffplatte mit als äußerst positiv und robust zu bewertenden Eigenschaften erhalten wird, die sich gleichzeitig dadurch auszeichnet, dass ein substanzieller Teil des Bindemittels in der gesamten Holzwerkstoffplatte durch ein Bindemittel mit einer biogenen Hauptkomponenten gebildet wird. Entsprechend besteht ein im Vergleich zu herkömmlichen Holzwerkstoffplatten erheblicher Teil der erfindungsgemäßen Platte aus biogenen Materialien, was Ressourcen schont und auch zur Nachhaltigkeit des Erzeugnisses beiträgt. Auch die Einsparung von formaldehydhaltigen Harzbindern als besonders vorteilhaft hervorzuheben, insbesondere vor dem Hintergrund der Aspekte des Gesundheitsschutzes sowie des Umweltschutzes.

Für diese bevorzugte Ausführung der vorliegenden Erfindung hat es sich zusätzlich bewährt, wenn die erste Schicht der Holzwerkstoffplatte mindestens einen Holzwerkstoff und, insbesondere ausschließlich, das biogene Hauptkomponenten enthaltende Bindemittel aufweist. Gleichermaßen ist es bevorzugt, wenn die zweite Schicht der Holzwerkstoffplatte das zweite, von dem ersten Bindemittel unterschiedliche, Bindemittel aufweist.

Insbesondere für den Fall, dass in der ersten, vorzugsweise als Deckschicht der Holzwerkstoffplatte ausgebildeten Schicht das biogene Hauptkomponenten enthaltende Bindemittel umfasst ist, kann eine besonders emissionsarme Holzwerkstoffplatte bereitgestellt werden. Selbst für den Fall, dass in der zweiten Schicht Bindemittel verwendet werden, die Formaldehyd aufweisen, konnte überraschend gezeigt werden, dass eine deutlich geringere Formaldehydemission erfolgt, als im Hinblick auf den Gehalt an Formaldehydharz zu erwarten gewesen wäre. Diesbezüglich hat sich unerwartet herausgestellt, dass das vorzugsweise in der ersten Schicht der Holzwerkstoffplatte umfasste biogene Hauptkomponenten enthaltende Bindemittel die Emission von ggf. in der zweiten Schicht vorhandenem Formaldehyd aus einem entsprechend formaldehydhaltigen Bindemittel effizient unterbindet. so dass insgesamte eine Holzwerkstoffplatte erhalten wird, deren Formaldehydemission - für den Fall, dass ein formaldehydhaltiges Bindemittel in der zweiten Schicht verwendet wird - weit unterhalb der erwartbaren Emissionswerte liegt. Ohne sich hierauf festlegen zu wollen, kann vermutet werden, dass die Struktur des ausgehärteten biogene Hauptkomponenten enthaltenden Bindemittels mit der Diffusion von Formaldehyd aus der Holzwerkstoffplatte interferiert, bspw. durch Interaktionen auf molekularer Ebenen, welche insbesondere auch für die bindende Wirkung des Bindemittels bereits eine Rolle spielen und entsprechend auch auf die Art und Weise, wie Formaldehyd durch die Holzwerkstoffplatte wandern kann, einwirken können.

Was nun die Zusammensetzung der Holzwerkstoffplatte im Hinblick auf den Holzwerkstoff, der in der Holzwerkstoffplatte verwendet wird, anbelangt, so hat es sich bewährt, wenn der Holzwerkstoff ausgewählt ist aus lignocellulosehaltigen Spänen und/oder Fasern, insbesondere ausgewählt aus der Gruppe von Laubhölzern, Nadelhölzern, Altholz, Stroh, Bast, Flachs, Hanf, Bagasse, Bambus, Pflanzenschrot, Altpapier, Altpappe, Altkarton und deren Mischungen, insbesondere Laubhölzern, Nadelhölzern, Altholz und deren Mischungen.

Wie bereits eingangs erwähnt, stammt der Holzwerkstoff dabei vorzugsweise aus Quellen, bei welchen der Holzwerkstoff als Kopplungs- bzw. Abfallprodukt anfällt. Insofern handelt es sich bei dem Holzwerkstoff vorzugsweise um Holz bzw. holzartiges Material, welches erhalten wird aus der Gruppe von Industrieholz, Sägewerksholz, Hohlresten, Altholz, Bauholz, Restholz, Schwachholz, Durchforstungsholz und deren Mischungen, insbesondere Industrieholz, Altholz, Restholz und deren Mischungen. Auf diese Weise kann eine effiziente Wertschöpfung sichergestellt werden und wird Holz aus Primärquellen geschont, was unter Umweltschutz- und Nachhaltigkeitsaspekten als vorteilhaft zu beurteilen ist.

Im Hinblick auf die Größe der Holzspäne bzw. Holzfasern hat es sich bewährt, wenn die Holzspäne eine Größe in einem Bereich von 0,5 bis 15 mm bzw. die Holzfasern eine Größe in einem Bereich von 1 bis 6 mm aufweisen. Gleichermaßen ist es im Rahmen der vorliegenden Erfindung auch möglich, dass Grobspäne verwendet werden. Hier hat es sich bewährt, wenn die Grobspäne eine Größe in einem Bereich von 100 mm bis 200 mm in Bezug auf die Länge, 10 bis 50 mm in Bezug auf die Breite, 0,6 bis 1,5 mm in Bezug auf die Dicke des Grobspans aufweisen.

Was nun die Zusammensetzung des biogene Hauptkomponenten enthaltenden Bindemittels anbelangt, so ist es allem voran bevorzugt, wenn das biogene Hauptkomponenten enthaltende Bindemittel frei von formaldehydhaltigen Bestandteilen ist.

Weiter hat es sich im Hinblick auf die biogene Hauptkomponente bewährt, wenn das biogene Hauptkomponenten enthaltende Bindemittel 1 bis 5, insbesondere 1 bis 3, vorzugsweise 1 bis 2, bevorzugt 2, biogene Hauptkomponenten enthält.

Im Rahmen der vorliegenden Erfindung hat es sich also als vorteilhaft erwiesen, wenn eine Mischung mehrerer bzw. insbesondere zumindest zweier unterschiedlicher biogener Hauptkomponenten in dem Bindemittel verwendet wird. Unterschiede zwischen den biogenen Hauptkomponenten können dabei dadurch begründet sein, dass die Zusammensetzung oder Herkunft der Komponenten unterschiedlich ist. Auch können Unterschiede in der Art und Weise der Bereitstellung bzw. Prozessierung der Komponenten begründet sein. Die Verwendung unterschiedlicher bzw. mehrerer biogener Hauptkomponenten in Form einer Mischung kann vorteilhaft eine Feinabstimmung des Bindeverhaltens des Bindemittels gestatten, so dass optimale Verarbeitungseigenschaften erreicht werden, die eine zeit- und kosteneffiziente Erzeugung der erfindungsgemäßen Holzwerkstoffplatten ermöglichen sowie auch Holzwerkstoffplatten liefern, die sich durch ein optimiertes Eigenschaftsprofil in Bezug auf Widerstandsfähigkeit, Stabilität, Robustheit und Haltbarkeit auszeichnen.

In Bezug auf die Beschaffenheit bzw. Zusammensetzung der biogenen Hauptkomponente kann diese vorteilhaft eine kohlenhydrathaltige und/oder eine proteinhaltige Hauptkomponente sein. Vorzugsweise ist dabei vorgesehen, dass die biogene Hauptkomponente eine proteinhaltige Hauptkomponente ist.

Es hat sich bewährt, wenn die biogene Hauptkomponente ausgewählt ist aus Hauptkomponenten tierischen und/oder pflanzlichen Ursprungs, insbesondere tierischen und pflanzlichen Ursprungs.

Vorteilhaft kann die biogene Hauptkomponenten also eine kohlenhydrathaltige Hauptkomponente tierischen und/oder pflanzlichen Ursprungs, insbesondere pflanzlichen Ursprungs sein. Bevorzugt kann das biogene Hauptkomponenten enthaltende Bindemittel somit ein oder mehrere kohlenhydrathaltige biogene Hauptkomponenten tierischen und/oder pflanzlichen Ursprungs, insbesondere eine Mischung mehrerer kohlenhydrathaltige biogener Hauptkomponenten tierischen oder pflanzlichen, vorzugsweise pflanzlichen, Ursprungs enthalten.

Besonders bevorzugt ist es im Rahmen der vorliegenden Erfindung, wenn die biogene Hauptkomponente eine proteinhaltige Hauptkomponente tierischen und/oder pflanzlichen Ursprungs, insbesondere tierischen und pflanzlichen Ursprungs, ist. In diesem Sinne hat es sich erfindungsgemäß vorteilhaft auch bewährt, wenn das biogene Hauptkomponenten enthaltende Bindemittel ein oder mehrere proteinhaltige biogene Hauptkomponenten tierischen und/oder pflanzlichen Ursprungs enthält, insbesondere eine Mischung mehrerer proteinhaltiger biogener Hauptkomponenten tierischen oder pflanzlichen Ursprungs enthält.

Wenn die biogene kohlenhydrathaltige Hauptkomponente tierischen Ursprungs ist, dann hat es sich als vorteilhaft erwiesen, wenn die biogene Hauptkomponente tierischen Ursprungs ausgewählt ist aus Glykogen und/oder Milchzucker.

Wenn die biogene proteinhaltige Hauptkomponente tierischen Ursprungs ist, dann hat es sich als vorteilhaft erwiesen, wenn die biogene Hauptkomponente tierischen Ursprungs ausgewählt ist aus der Gruppe von Casein, Glutin, Milcheiweiß, Hühnereiweiß, Albumen, Bluteiweiß, Hämoglobin, Albumin, Keratin, Kollagen, Fibrin, Fibrinogen und deren Mischung, in natürlicher und/oder denaturierter Form, insbesondere Casein, Glutin, Albumen, Bluteiweiß, Hämoglobin, Keratin, Kollagen, Fibrin und deren Mischung, in natürlicher und/oder denaturierter Form, vorzugsweise Glutin, Hämoglobin, Keratin, Kollagen, Fibrin, bevorzugt Hämoglobin und deren Mischung, in natürlicher und/oder denaturierter Form.

Gleichermaßen ist es vorteilhaft, wenn die biogene Hauptkomponente tierischen Ursprungs erhalten wird aus tierischer Milch, tierischem Blut, Federn und/oder Federmehl, Tiermehl, tierischem Knochenmehl, tierischem Fleischmehl, tierischem Haarmehl und deren Mischungen, in natürlicher und/oder prozessierter Form, insbesondere tierischem Blut, Tiermehl, tierischem Knochenmehl, tierischem Fleischmehl, und deren Mischungen, in natürlicher und/oder prozessierter Form, vorzugsweise tierischem Blut, in natürlicher und/oder prozessierter Form.

Entsprechend ist es im Rahmen der vorliegenden Erfindung positiv zu bewerten, dass die, insbesondere proteinhaltige, biogene Hauptkomponente tierischen Ursprungs aus Produkten der Tierkörperverwertung erhalten bzw. gewonnen werden kann, so dass hier eine ergänzende Wertschöpfung und möglichst vollständige Verwertung der tierischen Produkte erreicht werden kann.

Dabei sind im Rahmen der vorliegenden Erfindung besonders solche Tierkörperverwertungsprodukte bevorzugt, die einen hohen Proteingehalt aufweisen. Dies sind insbesondere Tierknochen, Tierhaut sowie gegebenenfalls Tierfedern, und/oder Tierblut, wobei die biogene Hauptkomponente tierischen Ursprungs besonders bevorzugt aus Tierknochen und/oder Tierblut erhalten wird.

Die Möglichkeit, dass im Rahmen der vorliegenden Erfindung insbesondere Tierblut bzw. dessen Bestandteile verwendet werden können, ist im Hinblick auf eine vollständige Verwertung von tierischen Produkten als besonders vorteilhaft hervorzuheben, da die insbesondere wertschöpfende Verwertung von tierischem Blut häufig problematisch ist und on der Regel vielmehr eine aufwändige Entsorgung des Bluts vorgenommen werden muss. Eine weitere Verwertung, wie sie mit der vorliegenden Erfindung möglich ist, stellt entsprechend eine wertvolle Möglichkeit der effizienten Nutzung von Kopplungs- bzw. Abfallprodukten dar.

Wenn die biogene kohlenhydrathaltige Hauptkomponente pflanzlichen Ursprungs ist, dann hat es sich bewährt, wenn die biogene Hauptkomponente pflanzlichen Ursprungs Stärke ist.

Für den Fall, dass die proteinhaltige biogene Hauptkomponente pflanzlichen Ursprungs ist, hat es sich bewährt, wenn die biogene Hauptkomponente pflanzlichen Ursprungs ausgewählt ist aus der Gruppe von Gluten, Getreideprotein, Maisprotein, Sojaprotein, Reisprotein, Rapsprotein, Erbsenprotein, Nussprotein, Erdnussprotein, Saatenprotein und deren Mischungen, in natürlicher und/oder prozessierter Form, insbesondere Gluten, Getreideprotein, Maisprotein, Sojaprotein, Reisprotein, Rapsprotein, Erbsenprotein, und deren Mischungen, in natürlicher und/oder prozessierter Form, vorzugsweise Gluten, Getreideprotein, Sojaprotein, Erbsenprotein und deren Mischungen, in natürlicher und/oder denaturierter Form. Gleichermaßen hat es sich im Rahmen der vorliegenden Erfindung bewährt, wenn die biogene Hauptkomponente pflanzlichen Ursprungs erhalten wird aus Getreide, insbesondere Weizen, Roggen, Gerste, Hafer Dinkel, Mais und/oder Reis, Hülsenfrüchtlern, insbesondere Soja, Kichererbse und/oder Erbse, Raps, Nüssen, Erdnüssen, Saaten, insbesondere Mohn, Sesam, Leinsamen, Chiasamen, Kürbiskerne, Sonnenblumenkernen und/oder Quinoa, und deren Mischungen, in natürlicher und/oder prozessierter Form, insbesondere Getreide, insbesondere Weizen, Roggen, Gerste, Hafer Dinkel, Mais und/oder Reis, Hülsenfrüchtlern, insbesondere Soja, Kichererbse und/oder Erbse, Raps und deren Mischungen, in natürlicher und/oder prozessierter Form, vorzugsweise Getreide, insbesondere Weizen, Roggen, Gerste, Hafer Dinkel, Mais und/oder Reis, Hülsenfrüchtlern, insbesondere Soja, Kichererbse und/oder Erbse und deren Mischungen, in natürlicher und/oder prozessierter Form.

Wiederum im Hinblick auf Umweltaspekte wird es dabei im Rahmen der vorliegenden Erfindung besonders bevorzugt, wenn die biogenen Hauptkomponente pflanzlichen Ursprungs erhalten wird aus Pflanzen bzw. Pflanzenbestandteilen, die nicht für den menschlichen Verzehr vorgesehen bzw. geeignet sind, so dass insoweit vorteilhaft keine Konkurrenz zur Verwertung der Pflanzen bzw. Pflanzenbestandteilen in Lebensmitteln bzw. zu Nahrungszwecken besteht.

Die Verwertung pflanzlicher Ressourcen ist im Hinblick auf die Aspekte Nachhaltigkeit sowie auch Klimafreundlichkeit ebenfalls positiv zu bewerten, insbesondere wobei auch Verwertungsmöglichkeiten geschaffen werden für Fälle, in denen eine Verwertung der Pflanzen bzw. Pflanzenbestandteile im Nahrungsmittelbereich nicht möglich ist, bspw. aufgrund von unzureichenden Qualitäten.

Was nun die Zusammensetzung des biogenen Hauptkomponenten enthaltenden Bindemittels anbelangt, so hat es sich bewährt, wenn das biogene Hauptkomponenten enthaltende Bindemittel die biogene Hauptkomponente in Mengen in einem Bereich von 25 bis 70 Gew.-%, insbesondere 30 bis 60 Gew.-%, vorzugsweise 35 bis 50 Gew.-%, bezogen auf die Bindemittelzusammensetzung, enthält.

Das biogene Hauptkomponenten enthaltende Bindemittel enthält die biogene Hauptkomponente tierischen Ursprungs in Mengen in einem Bereich von 10 bis 50 Gew.-%, vorzugsweise 15 bis 35 Gew.-%, bezogen auf die Bindemittelzusammensetzung.

Das biogene Hauptkomponenten enthaltende Bindemittel enthält die biogene Hauptkomponente pflanzlichen Ursprungs in Mengen in einem Bereich von bis 45 Gew.-%, vorzugsweise 10 bis 25 Gew.-%, bezogen auf die Bindemittelzusammensetzung.

Erfindungsgemäß können vorteilhaft also sowohl rein pflanzlich basierte biogene Hauptkomponenten enthaltende Bindemittel als auch rein tierisch basierte biogene Hauptkomponenten enthaltende Bindemittel oder auch Mischungen pflanzlich und tierisch basierter biogener Hauptkomponenten enthaltender Bindemittel in der erfindungsgemäßen Holzwerkstoffplatte verwendet werden. Damit zeichnet sich die erfindungsgemäße Holzwerkstoffplatte in Bezug auf ihre Zusammensetzung durch eine besondere Flexibilität aus und kann damit anpassbar auf Basis einer Vielzahl unterschiedlicher, insbesondere proteinhaltige, biogene Hauptkomponenten enthaltender Bindemittel erzeugt werden.

Erfindungsgemäß ist es dabei besonders bevorzugt, wenn eine Mischung von pflanzlich und tierisch basierten biogenen Hauptkomponenten in dem Bindemittel verwendet wird. Auf diese Weise kann eine optimale Bindemittelzusammenstellung in Bezug auf die Wirkeigenschaften des Bindemittels als auch den Aspekt Kosteneffizienz erreicht werden.

Erfindungsgemäß wird eine Mischung biogener Hauptkomponenten tierischen und pflanzlichen Ursprungs in dem Bindemittel verwendet.

Für eine besonders effektive bzw. effiziente Bindungswirkung des Bindemittels ist dabei die Hauptkomponente tierischen Ursprungs in größeren Anteilen in der Mischung von pflanzlichen und tierischen Hauptkomponenten enthalten. Demnach ist es erfindungsgemäß vorgesehen, dass das biogene Hauptkomponenten enthaltende Bindemittel die biogene Hauptkomponente tierischen und pflanzlichen Ursprungs in Mengenanteilen in einem Bereich von 70 : 30 bis 50 : 50, insbesondere 67 : 33 bis 55 : 45, bezogen auf das Bindemittel, enthält.

Darüber hinaus hat es sich als vorteilhaft erwiesen, wenn die biogene Hauptkomponente flüssig oder in Pulverform, insbesondere in Pulverform, verwendet wird. Auf diese Weise ist eine besonders genaue Dosierung der Hauptkomponente im Rahmen der Zubereitung bzw. Herstellung des Bindemittels möglich.

Weiter im Hinblick auf die Zusammensetzung des biogene Hauptkomponenten enthaltenden Bindemittels hat es sich außerdem bewährt, wenn das biogene Hauptkomponenten enthaltende Bindemittel ein Dispersionsmedium bzw. Lösungsmittel enthält, insbesondere wobei das Dispersionsmedium bzw. Bindemittel bevorzugt Wasser umfasst bzw. insbesondere ist.

Wenn das biogene Hauptkomponenten enthaltende Bindemittel Wasser als Lösungsmittel enthält, so hat es sich bewährt, wenn das Wasser in dem Bindemittel in Mengen in einem Bereich von 10 bis 50 Gew.-%, insbesondere 15 bis 40 Gew.-%, vorzugsweise 20 bis 35 Gew.-%, bezogen auf das Bindemittel, enthalten ist.

Darüber hinaus hat es sich bewährt, wenn das biogene Hauptkomponenten enthaltende Bindemittel Additive enthält.

Die Additive sind vorzugsweise ausgewählt aus der Gruppe von pH-Stellmitteln, Entschäumern, Verdickern, Feuchthaltemitteln, Stabilisatoren, Oxidationsmitteln und deren Mischungen. Vorteilhaft werden außerdem Additive eingesetzt, die freie Hydroxygruppen aufweisen, welche insbesondere im Hinblick auf die Bindeeigenschaften des Bindemittels einen verstärkenden Effekt ausüben.

Geeignete pH-Stellmittel sind beispielsweise Säuren oder Basen, bevorzugt Basen, insbesondere Hydroxybasen, vorzugsweise Natriumhydroxid und/oder Kaliumhydroxid, bevorzugt Natriumhydroxid.

Als Entschäumer haben sich insbesondere silikonfreie, vorzugsweise alkoxylierte, Fettalkohole bewährt.

Geeignete Verdicker sind natürliche Verdicker, wie beispielsweise Melasse. Weiterer Vorteil der Verwendung von Melasse ist der Gehalt von Zuckern bzw. Kohlenhydraten, die freie Hydroxygruppen umfassen.

Als Feuchthaltemittel haben sich im Rahmen der vorliegenden Erfindung Polyole bzw. Polyalkohole bewährt, insbesondere Glycerin, was sich gleichermaßen auch vorteilhaft auf die Wirkeigenschaften des Bindemittels in Bezug auf die Bindungswirkung auswirkt.

Als Stabilisatoren eignen sich erfindungsgemäß Wassergläser.

Bevorzugte Oxidationsmittel sind im Rahmen der vorliegenden Erfindung Permanganate und/oder Peroxide, insbesondere Kaliumpermanganat und/oder Wasserstoffperoxid. Vorzugsweise werden Permanganate, insbesondere Kaliumpermanganat, als Oxidationsmittel eingesetzt.

Was nun die Mengen anbelangt, in denen die vorgenannten Additive vorzugsweise im biogene Hauptkomponenten enthaltenden Bindemittel vorhanden sind, so hat es sich für das pH-Stellmittel bewährt, wenn dieses in dem Bindemittel in Mengen in einem Bereich von 0,1 bis 1 Gew.-%, insbesondere 0,25 bis 0,6 Gew.-%, bezogen auf das Bindemittel, enthalten ist.

Für den Verdicker hat es sich als vorteilhaft erwiesen, wenn dieser in dem Bindemittel in Mengenanteilen in einem Bereich von 1 bis 20 Gew.-%, insbesondere 3 bis 15 Gew.-%, vorzugsweise 4 bis 12,5 Gew.-%, bezogen auf das Bindemittel, enthalten ist.

Für den Entschäumer hat es sich bewährt, wenn dieser in dem Bindemittel in Mengenanteilen in einem Bereich von 0,01 bis 1 Gew.-%, insbesondere 0,05 bis 0,5 Gew.-%, vorzugsweise 0,075 bis 0,25 Gew.-%, bezogen auf das Bindemittel, enthalten ist.

Weiter vorteilhaft enthält das Bindemittel den Stabilisator in Mengen in einem Bereich von 0,5 bis 5 Gew.-%, insbesondere 1 bis 3 Gew.-%, vorzugsweise 1,5 bis 2,5 Gew.-%, bezogen auf das Bindemittel.

Das biogene Hauptkomponenten enthaltende Bindemittel zeichnet sich insgesamt durch eine Rezeptur aus, die ganz überwiegend auf natürlichen Bestandteilen beruht und, sofern überhaupt notwendig, nur geringe Mengen chemischer Hilfsstoffe benötigt. Gleichzeit weist das biogene Hauptkomponenten enthaltende Bindemittel Wirkeigenschaften auf, die mit herkömmlichen Formaldehydharzbindemitteln komplett vergleichbar bzw. als zumindest gleichwertig zu beurteilen sind. Das Bindemittel kann darüber hinaus auch kosteneffizient hergestellt werden, da die verwendeten Bestandteile, insbesondere die biogenen Hauptkomponente vorteilhaft als Kopplungs- bzw. Abfallprodukt anfällt und so einerseits günstig bezogen als auch darüber hinaus wertschöpfend verwendet werden kann.

Was die Wirkungsweise des biogene Hauptkomponenten enthaltenden Bindemittels anbelangt, so wurde überraschend festgestellt, dass die Bindemittelkomponenten keine kovalenten Bindungen, und insbesondere keine Polykondensationsreaktionen, eingehen, sondern vielmehr intermolekulare Wechselwirkungen auftreten, wie Wasserstoffbrückenbindungen, permanenter Dipol - permanenter Dipol Wechselwirkungen, van der Waals- und Dispersionswechselwirkungen (induzierter Dipol - induzierter Dipol). Es scheint dabei, dass die Wasserstoffbrückenbindung die größte Rolle unter den genannten Wechselwirkungen spielt, da alle Komponenten auch in der Lage sind, auf der Grundlage von Wasserstoffbrückenbindungen zu interagieren.

Vorteilhaft kann auch aufgrund einer hohen Konzentration an proteinhaltigen Komponenten in dem Bindemittel die Proteinaggregation oder die Verschränkung von Proteinkettenfragmenten eine Rolle spielen. Auch kann angenommen werden, dass Bindemittelkomponenten in der Lage sind, in die poröse Struktur des Holzwerkstoffs einzudringen, so dass die Bindungswirkung zwischen Holzwerkstoff und Bindemittel noch zusätzlich gestärkt wird. Weiterführende Beschreibungen des möglichen Wirkmechanismus des biogene Hauptkomponenten enthaltenden Bindemittels können den internationalen Anmeldungen WO 2021/101396 A1 und WO 2022/019790 A1 zu entnehmen, welche im Rahmen dieser Erfindung bevorzugt einsetzbare proteinhaltige Bindemittel offenbaren und deren Offenbarungsgehalt hiermit vollumfänglich in die vorliegende Erfindung miteinbezogen wird.

Was nun das zweite, von dem ersten biogene Hauptkomponenten enthaltende Bindemittel unterschiedliche, Bindemittel anbelangt, so hat es sich erfindungsgemäß bewährt, wenn das zweite Bindemittel ein Harz ist.

Weiter bevorzugt ist es, wenn das zweite Bindemittel ein Formaldehydharz enthält, insbesondere hieraus besteht.

Wenn das zweite Bindemittel einen Formaldehydharz enthält, so hat es sich weiter als vorteilhaft erwiesen, wenn das Formaldehydharz ausgewählt ist aus der Gruppe von Harnstoff-Formaldehydharzen, Phenol-Formaldehydharzen, Resorzin-Formaldehydharzen, formaldehydarmen Polykondensationsharzen und deren Mischungen, insbesondere Harnstoff-Formaldehydharzen.

Wie bereits ausgeführt wurde, ist es im Rahmen der vorliegenden Erfindung vorzugsweise vorgesehen, dass das zweite Bindemittel in der zweiten Schicht der erfindungsgemäßen Holzwerkstoffplatte enthalten ist, insbesondere wobei die zweite Schicht der erfindungsgemäßen Holzwerkstoffplatte vorzugsweise als Mittelschicht und somit insbesondere als innenliegende Schicht ausgebildet ist. Indem die zweite Schicht weiter bevorzugt durch mindestens eine, vorzugsweise zwei, Deckschichten in Form der ersten Schicht abgedeckt ist, kann im Rahmen der vorliegenden Erfindung die Emission von Formaldehyd aus dem zweiten Bindemittel, das vorzugsweise in der zweiten Schicht enthalten ist, gesenkt werden. Hierzu trägt insbesondere die vorzugsweise als Deckschicht ausgebildete erste Schicht bei. Denn im Rahmen der vorliegenden Erfindung wurde überraschend beobachtet, dass auf Basis der ersten Schicht und insbesondere dem in der ersten Schicht enthaltenen biogene Hauptkomponenten aufweisenden Bindemittel, die Emission bzw. der Austritt von Formaldehyd aus der Holzwerkstoffplatte gesenkt werden kann. Insoweit ist es in jedem Fall nicht als nachteilig zu bewerten, wenn die erfindungsgemäße Holzwerkstoffplatte als zweites Bindemittel ein Harz auf Formaldehydbasis enthält.

Die Emission von Formaldehyd ist im Vergleich zu herkömmlichen Holzwerkstoffplatten bereits auch generell dadurch deutlich geringer, dass erfindungsgemäß noch mindestens ein weiteres, vorteilhaft formaldehydfreies, Bindemittel, insbesondere in der ersten, vorzugsweise als Deckschicht ausgebildeten, Schicht der Holzwerkstoffplatte, verwendet wird. So ist der Anteil formaldehydhaltiger Harze in der Werkstoffplatte bereits grundsätzlich niedriger als in herkömmlichen Holzwerkstoffplatten.

Darüber hinaus verhindert bzw. verringert das erste, biogenen Hauptkomponenten enthaltende Bindemittel auch die Emission von Formaldehyd aus der Holzwerkstoffplatte, insbesondere wenn das Bindemittel in der Deckschicht der Platte umfasst ist.

Die Verwendung von formaldehydhaltigen Harzen für das zweite Bindemittel gestattet eine kostengünstige und zeiteffiziente Herstellung von sehr robusten und stabilen Holzwerkstoffplatten. So können die erfindungsgemäßen Holzwerkstoffplatten auf den gleichen Maschinen mit den gleichen Verfahrensdauern hergestellt werden, wie herkömmliche, auf formaldehydhaltigen Bindemitteln basierende Holzwerkstoffplatten. Gleichfalls zeichnen sich die Platten durch einen erhöhte Anteil nachhaltiger und nicht-chemisch basierter Inhaltsstoffe aus und sind unter Umweltschutz- und Gesundheitsaspekten als positiv zu bewerten.

Weiter in Bezug auf die Zusammensetzung der Schichten der erfindungsgemäßen Holzwerkstoffplatte hat es sich außerdem bewährt, wenn die mindestens einen Holzwerkstoff und das biogene Hauptkomponenten enthaltende Bindemittel aufweisende Schicht der Holzwerkstoffplatte das biogene Hauptkomponenten enthaltende Bindemittel in Mengen in einem Bereich von 5 bis 25 Gew.-%, insbesondere 8 bis 20 Gew.-%, vorzugsweise 10 bis 15 Gew.-%, bezogen auf die Menge absolut trockenen Holzwerkstoffs in der Schicht, enthält. Unter den vorgenannten Mengenangaben kann auch der Beleimungsgrad dieser Schicht, d.h. insbesondere der ersten Schicht, verstanden werden.

Weiterhin hat es sich im Rahmen der vorliegenden Erfindung bewährt, wenn die mindestens einen Holzwerkstoff und das zweite Bindemittel aufweisende Schicht der Holzwerkstoffplatte das zweite Bindemittel in Mengen in einem Bereich von 1 bis 15 Gew.-%, insbesondere 3 bis 10 Gew.-%, vorzugsweise 4 bis 7 Gew.-%, bezogen auf die Menge absolut trockenen Holzwerkstoffs in der Schicht, enthält. Auch hier können die Mengenangaben als Beleimungsgrad der Schicht, insbesondere der zweiten Schicht, aufgefasst werden.

Im Hinblick auf die Holzwerkstoffplatte insgesamt hat es sich darüber hinaus bewährt, wenn die Holzwerkstoffplatte eine Rohdichte in einem Bereich von 400 bi s 950 kg/m³, insbesondere 400 bis 800 kg/m³, vorzugsweise 500 bis 750 kg/m³, bevorzugt 600 bis 700 kg/m³, besonders bevorzugt 625 bis 675 kg/m³, aufweist. Die Rohdichte der Holzwerkstoffplatte wird bestimmt nach der Norm EN 323:1993.

Weiter ist es erfindungsgemäß vorzugsweise vorgesehen, dass die Holzwerkstoffplatte eine Biegefestigkeit in einem Bereich von 3 bis 25 N/mm², insbesondere 5 bis 20 N/mm², vorzugsweise 6 bis 17 N/mm², bevorzugt 6,5 bis 15 N/mm², aufweist. Die Biegefestigkeit wird dabei bestimmt nach der Norm EN 310:1993.

Zudem ist es bevorzugt, wenn die Holzwerkstoffplatte ein Biege-Elastizitätsmodul in einem Bereich von 750 bis 3000 N/mm², insbesondere 1000 bis 2750 N/mm², vorzugsweise 1250 bis 2500 N/mm², bevorzugt 1500 bis 2250 N/mm², aufweist. Das Biege-Elastizitätsmodul wird nach der Norm EN 310:1993 bestimmt.

Schließlich ist es im Rahmen der vorliegenden Erfindung vorzugsweise vorgesehen, dass die Holzwerkstoffplatte eine Querzugfestigkeit in einem Bereich von 0,05 bis 1,6 N/mm², insbesondere 0,1 bis 1,2 N/mm², vorzugsweise 0,1 bis 0,75 N/mm², bevorzugt 0,15 bis 0,6 N/mm², besonders bevorzugt 0,2 bis 0,55 N/mm², aufweist. Die Querzugfestigkeit der wird bestimmt nach der Norm EN 319:1993.

Die erfindungsgemäße Holzwerkstoffplatte zeichnet sich demnach durch gute mechanische Eigenschaften aus, ist druck- und dimensionsstabil sowie robust und belastbar ausgebildet. Die Holzwerkstoffplatte erfüllt demgemäß die erforderlichen gängigen Normen und eignet sich vorteilhaft für vielzählige Anwendungen, insbesondere wobei auch solche Anwendungen miterfasst sich, die mit vergleichsweise hohen Belastungen bzw. einer vergleichsweise langen Nutzungsdauer einhergehen.

Es zeigen die Figurendarstellungen gemäß:
- Fig. 1: eine erfindungsgemäße Holzwerkstoffplatte mit einem zweischichtigen Aufbau im Querschnitt,
- Fig. 2: eine erfindungsgemäße Holzwerkstoffplatte mit einem dreischichtigen Aufbau im Querschnitt,
- Fig. 3: eine weitere erfindungsgemäße Holzwerkstoffplatte mit einem dreischichtigen Aufbau im Querschnitt,
- Fig. 4: eine als Verbundplatte ausgebildete erfindungsgemäße Holzwerkstoffplatte mit einem insgesamt vierschichtigen Aufbau im Querschnitt.

Weiterer Gegenstand der vorliegenden Erfindung - gemäß einem **zweiten** Aspekt der vorliegenden - ist eine Spanplatte, umfassend eine Holzwerkstoffplatte nach der vorliegenden Erfindung, insbesondere bestehend hieraus.

Für weitere Einzelheiten zu der erfindungsgemäßen Spanplatte kann auf die obigen Ausführungen zu der erfindungsgemäßen Holzwerkstoffplatte verwiesen werden, welche in Bezug auf die erfindungsgemäße Spanplatte entsprechend gelten.

Wiederum weiterer Gegenstand der vorliegenden Erfindung - gemäß einem **dritten** Aspekt der vorliegenden Erfindung - ist eine Faserplatte, umfassend eine Holzwerkstoffplatte nach der vorliegenden Erfindung, insbesondere bestehend hieraus.

Für weitere Einzelheiten zu der erfindungsgemäßen Faserplatte kann auf die obigen Ausführungen zu den übrigen Erfindungsaspekten verwiesen werden, welche in Bezug auf die Faserplatte entsprechend gelten.

Wiederum weiterer Gegenstand der vorliegenden Erfindung - gemäß einem **vierten** Aspekt der vorliegenden Erfindung - ist eine OSB-Platte, umfassend eine Holzwerkstoffplatte nach der vorliegenden Erfindung, insbesondere bestehend hieraus.

Für weitere Einzelheiten zu der erfindungsgemäßen OSB-Platte kann auf die obigen Ausführungen zu den übrigen Erfindungsaspekten verwiesen werden, welche in Bezug auf die OSB-Platte entsprechend gelten.

Wiederum weiterer Gegenstand der vorliegenden Erfindung - gemäß einem **fünften** Aspekt der vorliegenden Erfindung - ist eine Verbundplatte, umfassend eine Holzwerkstoffplatte nach der vorliegenden Erfindung sowie hierauf aufgebracht mindestens eine weite Materiallage, insbesondere eine Dekor- und/oder Funktionslage, vorzugsweise ausgewählt aus Dekorplatten, Dekorlaminaten, HP-Platten und/oder HP-Laminaten.

Erfindungsgemäße Verbundplatten eignen sich vorteilhaft für den Möbel- und Innenausbau, wobei insbesondere ausgehend von der verwendeten erfindungsgemäßen Holzwerkstoffplatte gewährleistet werden kann, dass eine gesundes und möglichst von Schadstoffen freies Raumklima erhalten bleibt.

Die Gestaltung der Dekor- und/oder Funktionslage kann dabei vielfältig ausfallen, insbesondere im Hinblick auf Farbe, Struktur, Maserung und/oder Musterung der Dekor- bzw. Funktionslagenoberflache sowie auch im Hinblick auf die Materialbeschaffenheit, -dicke und/oder -ausrüstung, mittels welcher dann auch das Eigenschaftsprofil der Erfindungsgemäßen Verbundplatte noch erweitert werden kann.

Für weitere Einzelheiten zu der erfindungsgemäßen Verbundplatte kann auf die obigen Ausführungen zu den übrigen Erfindungsaspekten verwiesen werden, welche in Bezug auf die Verbundplatte entsprechend gelten.

Wiederum weiterer Gegenstand der vorliegenden Erfindung - gemäß einem **sechsten** Aspekt der vorliegenden Erfindung - ist ein Verfahren zur Herstellung einer Holzwerkstoffplatte, wie in Anspruch 15 definiert.

Es kann erfindungsgemäß vorgesehen sein, dass es sich bei dem ersten, zweiten und ggf. weiteren Holzwerkstoff um gleiche oder unterschiedliche Holzwerkstoffe handelt.

Wenn gleiche Holzwerkstoffe in den Schichten verwendet werden, so kann dies auch derart aufgefasst werden, dass vorportionierte Mengen des Holzwerkstoffes, getrennt voneinander, je mit dem ersten, zweiten oder auch weiteren Bindemittel vermengt werden. Im Fall von unterschiedlichen Holzwerkstoffen kann demgegenüber davon ausgegangen werden, das unterschiedliche Fraktionen des Holzwerkstoffes, getrennt voneinander, je mit den genannten Bindemitteln vermengt werden.

Entsprechend ist es bevorzugt, insbesondere wenn unterschiedliche Holzwerkstoffe verwendet werden, wenn der Holzwerkstoff in Verfahrensschritt a) fraktioniert bereitgestellt wird, d.h. insbesondere der Größe nach sortiert.

Wenn für den ersten, zweiten und ggf. weiteren Holzwerkstoff der gleiche Holzwerkstoff verwendet werden soll, so ist es hingegen bevorzugt, wenn der Holzwerkstoff in Verfahrensschritt a) portioniert bereitgestellt wird, d.h. insbesondere der Menge nach sortiert.

In Bezug auf die optional vorgesehene mindestens eine weitere Schicht kann es vorgesehen sein, dass diese entsprechend der ersten Schicht ausgebildet ist und somit den mit einem der Bindemittel vermischten ersten oder zweiten Holzwerkstoff enthält.

Im Rahmen einer besonderen Ausführung der vorliegenden Erfindung hat es sich weiter bewährt, dass
a) in einem ersten Schritt mindestens ein erster und ein zweiter Holzwerkstoff bereitgestellt werden, und
b) in einem zweiten Schritt der erste Holzwerkstoff mit dem ersten, biogene Hauptkomponenten enthaltenden Bindemittel gemischt wird, sowie hiervon getrennt
   der zweite Holzwerkstoff mit dem zweiten, von dem ersten Bindemittel unterschiedlichen, Bindemittel gemischt wird, sowie ggf. hiervon getrennt
c) in einem dritten Schritt auf einem Träger eine erste Schicht des mit dem biogene Hauptkomponenten enthaltenden Bindemittel vermischten ersten Holzwerkstoffs gestreut wird, sowie hierauf
   eine zweite Schicht des mit dem zweiten Bindemittel vermischten zweiten Holzwerkstoffs gestreut wird, sowie hierauf
   eine weitere Schicht des mit dem biogene Hauptkomponenten enthaltenden Bindemittel vermischten ersten Holzwerkstoffs gestreut wird, und
d) in einem vierten Schritt Holzwerkstoff und Bindemittelzusammensetzung innerhalb der Schichten und die Schichten miteinander unter Einwirkung von Druck und Temperatur zu einer Holzwerkstoffplatte verpresst werden.

Alternativ kann es vorzugsweise auch vorgesehen sein, dass
a) in einem ersten Schritt ein Holzwerkstoff bereitgestellt werden, und
b) in einem zweiten Schritt der Holzwerkstoff mit dem ersten, biogene Hauptkomponenten enthaltenden Bindemittel gemischt wird, sowie hiervon getrennt
   der Holzwerkstoff mit dem zweiten, von dem ersten Bindemittel unterschiedlichen, Bindemittel gemischt wird, sowie ggf. hiervon getrennt
   der Holzwerkstoff mit dem ersten und/oder zweiten und/oder einem weiteren Bindemittel gemischt wird, und
c) in einem dritten Schritt auf einem Träger eine erste Schicht des mit einem der Bindemittel vermischten Holzwerkstoffs gestreut wird, sowie hierauf eine zweite Schicht des mit einem der Bindemittel vermischten Holzwerkstoffs gestreut wird, sowie ggf. hierauf
   mindestens eine weitere Schicht des mit einem der Bindemittel vermischten weiteren Holzwerkstoffs gestreut wird, und
d) in einem vierten Schritt Holzwerkstoff und Bindemittelzusammensetzung innerhalb der Schichten und die Schichten miteinander unter Einwirkung von Druck und Temperatur zu einer Holzwerkstoffplatte verpresst werden, wobei die erste Schicht und die zweite Schicht eine voneinander unterschiedliche Zusammensetzung, bezogen auf das Bindemittel, aufweisen und die zweite und die dritte Schicht eine voneinander unterschiedliche Zusammensetzung, bezogen auf das Bindemittel, aufweisen, und wobei das biogene Hauptkomponenten enthaltende Bindemittel zumindest in der ersten und/oder zweiten Schicht der Holzwerkstoffplatte enthalten ist.

Im Rahmen dieser Ausführung ist vorteilhaft vorgesehen, dass für jede Schicht der gleiche Holzwerkstoff verwendet wird, d.h. vorportionierte Mengen des Holzwerkstoffs werden, getrennt voneinander, je mit dem ersten, zweiten und/oder ggf. weiteren Bindemittel gemischt und die Mischungen aus vorportioniertem Holzwerkstoff und erstem, zweiten und/oder ggf. weiterem Bindemittel werden dann zu Schichten gestreut und die Schichten schließlich verpresst.

Bevorzugt kann es für die mindestens eine weitere Schicht auch hier vorgesehen sein, dass diese entsprechend der ersten Schicht ausgebildet ist. Besonders bevorzugt umfasst die erste Schicht dabei neben dem Holzwerkstoff das biogene Hauptkomponenten enthaltende Bindemittel.

Im Allgemeinen ist der bereitgestellte, insbesondere erste, zweite und ggf. weitere, Holzwerkstoff in Verfahrensschritt a) vorteilhaft getrocknet, so dass der Holzwerkstoff direkt für das erfindungsgemäße Verfahren eingesetzt werden kann.

Für das Verfahren hat es sich außerdem bewährt, wenn der Holzwerkstoff in Verfahrensschritt b) mit dem biogene Hauptkomponenten enthaltenden Bindemittel in Mengen in einem Bereich von 5 bis 25 Gew.-.%, insbesondere 8 bis 20 Gew.-%, vorzugsweise 10 bis 15 Gew.-%, bezogen auf die Menge absolut trockenen Holzwerkstoffs, gemischt wird.

Gleichermaßen hat es sich bewährt, wenn der Holzwerkstoff in Verfahrensschritt b) mit dem zweiten, von dem ersten Bindemittel unterschiedlichen, Bindemittel in Mengen in einem Bereich von 1 bis 15 Gew.-%, insbesondere 3 bis 10 Gew.-%, vorzugsweise 4 bis 7 Gew.-%, bezogen auf die Menge absolut trockenen Holzwerkstoffs, gemischt wird.

Das Mischen des Holzwerkstoffs mit dem ersten und zweiten sowie ggf. weiteren Bindemittel erfolgt dabei vorteilhaft separat voneinander, so dass je voneinander getrennte einzelne Holzwerkstoff-Bindemittelmischungen erhalten werden, welche dann im nächsten Verfahrensschritt c) auch einzeln eingesetzt werden können.

Was dann das Verpressen von Holzwerkstoff und Bindemittel einerseits sowie das Verpressen der Schichten andererseits anbelangt, so hat es sich im Rahmen der vorliegenden Erfindung bewährt, wenn Holzwerkstoff und Bindemittel innerhalb der Schichten und die Schichten miteinander in Verfahrensschritt d) mit einem Presszeitfaktor in einem Bereich von 2 bis 10 s/mm, insbesondere 2 bis 6 s/mm, vorzugsweise 3 bis 5,5 s/mm, bevorzugt 3,5 bis 5 s/mm, verpresst werden.

Darüber hinaus hat es sich auch bewährt, wenn Holzwerkstoff und Bindemittel innerhalb der Schichten und die Schichten miteinander in Verfahrensschritt d) mit einem initialen Pressdruck in einem Bereich von 2 bis 5 N/mm², insbesondere 2,5 bis 4,5 N/mm², vorzugsweise 3 bis 4 N/mm² und/oder bei initialen Temperaturen in einem Bereich von 220 bis 280 °C, insbesondere 230 bis 265 °C, vorzugsweise 240 bis 250 °C, verpresst werden.

Auch hat es sich als vorteilhaft erwiesen, wenn Holzwerkstoff und Bindemittel innerhalb der Schichten und die Schichten miteinander in Verfahrensschritt d) im Anschluss an das initiale Pressen bei einem Pressdruck in einem Bereich von 0,1 bis 5 N/mm², insbesondere 0,25 bis 4 N/mm², vorzugsweise 0,4 bis 3 N/mm² und/oder bei Temperaturen in einem Bereich von 175 bis 270 °C, insbesondere 180 bis 260 °C, vorzugsweise 190 bis 250 °C, gehalten werden.

Unter Verwendung der genannten Verfahrensparameter werden Holzwerkstoffplatten mit einem optimierten Eigenschaftsprofil in zeiteffizienter und kostengünstiger Weise erhalten.

Für weitere Einzelheiten zu dem erfindungsgemäßen Verfahren kann auf die obigen Ausführungen zu den übrigen Erfindungsaspekten verwiesen werden, welche in Bezug auf das Verfahren entsprechend gelten.

Weitere Vorteile, Eigenschaften, Aspekte und Merkmale der vorliegenden Erfindung ergeben sich aus der folgenden Beschreibung von in den Zeichnungen dargestellten, erfindungsgemäß bevorzugten Ausführungsformen der vorliegenden Erfindung sowie dem Ausführungsbeispiel.

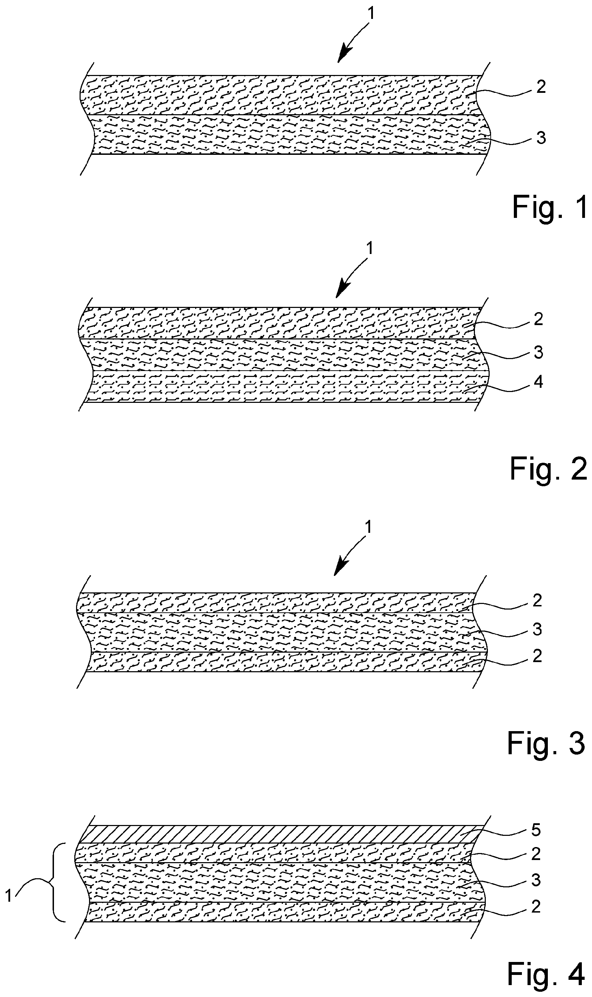

Es zeigt die Fig. 1 eine erfindungsgemäße Holzwerkstoffplatte 1 mit einem zweischichtigen Aufbau im Querschnitt.

Die Holzwerkstoffplatte 1 enthält mindestens einen Holzwerkstoff und mindestens zwei Bindemittel. Die erste Schicht 2 der Holzwerkstoffplatte weist dabei mindestens einen Holzwerkstoff und ein erstes Bindemittel auf. Die zweite Schicht 3 der Holzwerkstoffplatte 1 weist mindestens einen Holzwerkstoff und ein zweites, von dem ersten Bindemittel unterschiedliches, Bindemittel auf. Maßgeblich für die Holzwerkstoffplatte 1 ist, dass mindestens eines der mindestens zwei Bindemittel eine oder mehrere biogene Hauptkomponenten enthält, und dass das biogene Hauptkomponenten enthaltende Bindemittel in der ersten Schicht 2 und/oder zweiten Schicht 3 der Holzwerkstoffplatte enthalten ist.

Der Holzwerkstoff ist bevorzugt ein Werkstoff in Form eines Span- oder auch Fasermaterials, welches auf der Basis von Holz oder holzartigen Materialien, d.h. im Wesentlichen lignocellulosehaltige Materialien, gebildet ist.

Im Rahmen der vorliegenden Erfindung kann es vorgesehen sein, dass die erfindungsgemäße Holzwerkstoffplatte einen einzelnen Holzwerkstoff oder auch eine Mischung verschiedener Holzwerkstoffe enthält.

Bezüglich des Bindemittels hat es sich bewährt, wenn die Holzwerkstoffplatte genau ein biogene Hauptkomponenten enthaltendes Bindemittel enthält. Weiter bevorzugt enthält das biogene Hauptkomponente enthaltende Bindemittel ausschließlich biogene Hauptkomponenten. Ganz besonders bevorzugt ist die biogene Hauptkomponente das alleinige Bindemittel. Weiterhin ist es bevorzugt, dass das biogene Hauptkomponenten enthaltende Bindemittel frei von formaldehydhaltigen Bestandteilen ist.

Vorteilhaft kann das biogene Hauptkomponenten enthaltende Bindemittel, insbesondere ausschließlich, in der ersten Schicht 2 oder zweiten Schicht 3 der Holzwerkstoffplatte enthalten sein. Es kann also sein, dass das biogene Hauptkomponenten enthaltende Bindemittel in beiden Schichten 2,3 der erfindungsgemäßen Holzwerkstoffplatte 1 umfasst ist, oder nur in einer der Schichten 2 oder 3.

Erfindungsgemäß bevorzugt ist die erste Schicht 2 der Holzwerkstoffplatte 1 als Deckschicht ausgebildet. Die zweite Schicht 3 der Holzwerkstoffplatte 1 ist entsprechend vorteilhaft als Mittelschicht ausgebildet. In Rahmen dieser Ausführung hat es sich bewährt, wenn der Holzwerkstoff der zweiten, insbesondere als Mittelschicht ausgebildeten, Schicht 3 eine geringere Dichte aufweist als der Holzwerkstoff der ersten, insbesondere als Deckschicht ausgebildeten, Schicht 2.

Bevorzugt weist die erste Schicht 2 an der Holzwerkstoffplatte 1 außerdem einen Gewichtsanteil in einem Bereich von 5 bis 50 Gew.-%, insbesondere 10 bis 30 Gew.-%, vorzugsweise 15 bis 20 Gew.-%, bezogen auf das Gewicht der Holzwerkstoffplatte auf. Die zweite Schicht 3 weist an der Holzwerkstoffplatte 1 vorteilhaft einen Gewichtsanteil in einem Bereich von 50 bis 90 Gew.-%, insbesondere 55 bis 80 Gew.-%, vorzugsweise 60 bis 70 Gew.-%, bezogen auf das Gewicht der Holzwerkstoffplatte, auf.

Der Holzwerkstoff ist vorzugsweise ausgewählt aus lignocellulosehaltigen Spänen und/oder Fasern, insbesondere ausgewählt aus der Gruppe von Laubhölzern, Nadelhölzern, Altholz, Stroh, Bast, Flachs, Hanf, Bagasse, Bambus, Pflanzenschrot, Altpapier, Altpappe, Altkarton und deren Mischungen, insbesondere Laubhölzern, Nadelhölzern, Altholz und deren Mischungen.

Vorteilhaft handelt es sich bei dem Holzwerkstoff zudem um Holz bzw. holzartiges Material, das erhalten wird aus der Gruppe von Industrieholz, Sägewerksholz, Hohlresten, Altholz, Bauholz, Restholz, Schwachholz, Durchforstungsholz und deren Mischungen, insbesondere Industrieholz, Altholz, Restholz und deren Mischungen. Auf diese Weise kann eine effiziente Wertschöpfung sichergestellt werden und wird Holz aus Primärquellen geschont, was unter Umweltschutz- und Nachhaltigkeitsaspekten als vorteilhaft zu beurteilen ist.

Im Hinblick auf die Größe der Holzspäne bzw. Holzfasern hat es sich bewährt, wenn die Holzspäne eine Größe in einem Bereich von 0,5 bis 15 mm bzw. die Holzfasern eine Größe in einem Bereich von 1 bis 6 mm aufweisen. Gleichermaßen ist es im Rahmen der vorliegenden Erfindung auch möglich, dass Grobspäne verwendet werden. Hier hat es sich bewährt, wenn die Grobspäne eine Größe in einem Bereich von 100 mm bis 200 mm in Bezug auf die Länge, 10 bis 50 mm in Bezug auf die Breite, 0,6 bis 1,5 mm in Bezug auf die Dicke des Grobspans aufweisen.

Das biogene Hauptkomponenten enthaltende Bindemittel enthält vorteilhaft 1 bis 5, insbesondere 1 bis 3, vorzugsweise 1 bis 2, bevorzugt 2, biogene Hauptkomponenten. Im Rahmen der vorliegenden Erfindung hat es sich also u.a. als vorteilhaft erwiesen, wenn eine Mischung mehrerer bzw. insbesondere zumindest zweier unterschiedlicher biogener Hauptkomponenten in dem Bindemittel verwendet wird.

Vorteilhaft kann die biogene Hauptkomponenten eine kohlenhydrathaltige Hauptkomponente tierischen und/oder pflanzlichen Ursprungs, insbesondere pflanzlichen Ursprungs sein. Bevorzugt kann das biogene Hauptkomponenten enthaltende Bindemittel somit ein oder mehrere kohlenhydrathaltige biogene Hauptkomponenten tierischen und/oder pflanzlichen Ursprungs, insbesondere eine Mischung mehrerer kohlenhydrathaltige biogener Hauptkomponenten tierischen oder pflanzlichen, vorzugsweise pflanzlichen, Ursprungs enthalten
Wenn die biogene kohlenhydrathaltige Hauptkomponente tierischen Ursprungs ist, dann hat es sich als vorteilhaft erwiesen, wenn die biogene Hauptkomponente tierischen Ursprungs ausgewählt ist aus Glykogen und/oder Milchzucker.

Die biogene Hauptkomponente tierischen Ursprungs ist vorzugsweise ausgewählt aus, insbesondere proteinhaltigen, Bindemitteln aus der Gruppe von Casein, Glutin, Milcheiweiß, Hühnereiweiß, Albumen, Bluteiweiß, Hämoglobin, Albumin, Keratin, Kollagen, Fibrin, Fibrinogen und deren Mischung, in natürlicher und/oder denaturierter Form, insbesondere Casein, Glutin, Albumen, Bluteiweiß, Hämoglobin, Keratin, Kollagen, Fibrin und deren Mischung, in natürlicher und/oder denaturierter Form, vorzugsweise Glutin, Hämoglobin, Keratin, Kollagen, Fibrin, bevorzugt Hämoglobin und deren Mischung, in natürlicher und/oder denaturierter Form. Gleichermaßen ist es vorteilhaft, wenn die biogene Hauptkomponente tierischen Ursprungs erhalten wird aus tierischer Milch, tierischem Blut, Federn und/oder Federmehl, Tiermehl, tierischem Knochenmehl, tierischem Fleischmehl, tierischem Haarmehl und deren Mischungen, in natürlicher und/oder prozessierter Form, insbesondere tierischem Blut, Tiermehl, tierischem Knochenmehl, tierischem Fleischmehl, und deren Mischungen, in natürlicher und/oder prozessierter Form, vorzugsweise tierischem Blut, in natürlicher und/oder prozessierter Form.

Wenn die biogene kohlenhydrathaltige Hauptkomponente pflanzlichen Ursprungs ist, dann hat es sich bewährt, wenn die biogene Hauptkomponente pflanzlichen Ursprungs Stärke ist.

Wenn die biogene Hauptkomponente pflanzlichen Ursprungs ist, hat es sich bewährt, dass die biogene Hauptkomponente pflanzlichen Ursprungs ausgewählt ist aus, insbesondere proteinhaltigen, Bindemitteln aus der Gruppe von Gluten, Getreideprotein, Maisprotein, Sojaprotein, Reisprotein, Rapsprotein, Erbsenprotein, Nussprotein, Erdnussprotein, Saatenprotein und deren Mischungen, in natürlicher und/oder prozessierter Form, insbesondere Gluten, Getreideprotein, Maisprotein, Sojaprotein, Reisprotein, Rapsprotein, Erbsenprotein, und deren Mischungen, in natürlicher und/oder prozessierter Form, vorzugsweise Gluten, Getreideprotein, Sojaprotein, Erbsenprotein und deren Mischungen, in natürlicher und/oder denaturierter Form. Gleichermaßen vorteilhaft wird die biogene Hauptkomponente pflanzlichen Ursprungs erhalten aus Getreide, insbesondere Weizen, Roggen, Gerste, Hafer Dinkel, Mais und/oder Reis, Hülsenfrüchtlern, insbesondere Soja, Kichererbse und/oder Erbse, Raps, Nüssen, Erdnüssen, Saaten, insbesondere Mohn, Sesam, Leinsamen, Chiasamen, Kürbiskerne, Sonnenblumenkernen und/oder Quinoa, und deren Mischungen, in natürlicher und/oder prozessierter Form, insbesondere Getreide, insbesondere Weizen, Roggen, Gerste, Hafer Dinkel, Mais und/oder Reis, Hülsenfrüchtlern, insbesondere Soja, Kichererbse und/oder Erbse, Raps und deren Mischungen, in natürlicher und/oder prozessierter Form, vorzugsweise Getreide, insbesondere Weizen, Roggen, Gerste, Hafer Dinkel, Mais und/oder Reis, Hülsenfrüchtlern, insbesondere Soja, Kichererbse und/oder Erbse und deren Mischungen, in natürlicher und/oder prozessierter Form. Erfindungsgemäß können vorteilhaft also sowohl rein pflanzlich basierte biogene Hauptkomponenten enthaltende Bindemittel als auch rein tierisch basierte biogene Hauptkomponenten enthaltende Bindemittel oder auch Mischungen pflanzlich und tierisch basierter biogener Hauptkomponenten enthaltender Bindemittel in der erfindungsgemäßen Holzwerkstoffplatte 1 verwendet werden. Dabei ist es besonders bevorzugt, wenn eine Mischung von pflanzlich und tierisch basierten biogenen Hauptkomponenten in dem Bindemittel verwendet wird.

Erfindungsgemäß wird eine Mischung biogener Hauptkomponenten tierischen und pflanzlichen Ursprungs in dem Bindemittel verwendet, wobei das biogene Hauptkomponenten enthaltende Bindemittel die biogene Hauptkomponente tierischen und pflanzlichen Ursprungs in Mengenanteilen in einem Bereich von 70 : 30 bis 50 : 50, insbesondere 67 : 33 bis 55 : 45, bezogen auf das Bindemittel, enthält.

Darüber hinaus hat es sich bewährt, wenn die biogene Hauptkomponente flüssig oder in Pulverform, insbesondere in Pulverform, verwendet wird.

Die Zusammensetzung des biogene Hauptkomponenten enthaltenden Bindemittels umfasst vorteilhaft außerdem ein Dispersionsmedium bzw. Lösungsmittel, insbesondere wobei das Bindemittel bevorzugt Wasser als Dispersionsmedium bzw. Lösungsmittel enthält. Es hat sich bewährt, wenn das Wasser in dem Bindemittel in Mengen in einem Bereich von 10 bis 50 Gew.-%, insbesondere 15 bis 40 Gew.-%, vorzugsweise 20 bis 35 Gew.-%, bezogen auf das Bindemittel, enthalten ist.

Darüber hinaus hat es sich auch bewährt, wenn das biogene Hauptkomponenten enthaltende Bindemittel Additive enthält. Die Additive sind vorzugsweise ausgewählt aus der Gruppe von pH-Stellmitteln, Entschäumern, Verdickern, Feuchthaltemitteln, Stabilisatoren, Oxidationsmitteln und deren Mischungen. Vorteilhaft werden außerdem Additive eingesetzt, die freie Hydroxygruppen aufweisen, welche insbesondere im Hinblick auf die Bindeeigenschaften des Bindemittels einen verstärkenden Effekt ausüben.

Geeignete pH-Stellmittel sind beispielsweise Säuren oder Basen, bevorzugt Basen, insbesondere Hydroxybasen, vorzugsweise Natriumhydroxid und/oder Kaliumhydroxid, bevorzugt Natriumhydroxid. Als Entschäumer haben sich insbesondere silikonfreie, vorzugsweise alkoxylierte, Fettalkohole bewährt. Geeignete Verdicker sind außerdem natürliche Verdicker wie beispielsweise Melasse. Weiterer Vorteil der Verwendung von Melasse ist der Gehalt von Zuckern bzw. Kohlenhydraten, die freie Hydroxygruppen umfassen. Als Feuchthaltemittel haben sich im Rahmen der vorliegenden Erfindung Polyole bzw. Polyalkohole bewährt, insbesondere Glycerin, was sich gleichermaßen auch vorteilhaft auf die Wirkeigenschaften des Bindemittels in Bezug auf die Bindungswirkung auswirkt. Als Stabilisatoren eignen sich erfindungsgemäß Wassergläser. Bevorzugte Oxidationsmittel sind im Rahmen der vorliegenden Erfindung Permanganate, insbesondere Kaliumpermanganat.

Für das pH-Stellmittel hat es sich dabei bewährt, wenn dieses in dem Bindemittel in Mengen in einem Bereich von 0,1 bis 1 Gew.-%, insbesondere 0,25 bis 0,6 Gew.-%, bezogen auf das Bindemittel, enthalten ist. Für den Verdicker hat es sich als vorteilhaft erwiesen, wenn dieser in dem Bindemittel in Mengenanteilen in einem Bereich von 1 bis 20 Gew.-%, insbesondere 3 bis 15 Gew.-%, vorzugsweise 4 bis 12,5 Gew.-%, bezogen auf das Bindemittel, enthalten ist. Der Entschäumer ist in dem Bindemittel vorteilhaft in Mengenanteilen in einem Bereich von 0,01 bis 1 Gew.-%, insbesondere 0,05 bis 0,5 Gew.-%, vorzugsweise 0,075 bis 0,25 Gew.-%, bezogen auf das Bindemittel, enthalten. Den Stabilisator enthält das Bindemittel vorteilhaft in Mengen in einem Bereich von 0,5 bis 5 Gew.-%, insbesondere 1 bis 3 Gew.-%, vorzugsweise 1,5 bis 2,5 Gew.-%, bezogen auf das Bindemittel.

Das zweite, von dem ersten biogene Hauptkomponenten enthaltenden Bindemittel unterschiedliche, Bindemittel ist vorzugsweise ein Harz. Vorteilhaft enthält das zweite Bindemittel ein Formaldehydharz bzw. besteht insbesondere hieraus. Wenn das zweite Bindemittel einen Formaldehydharz enthält, so hat es sich weiter bewährt, wenn das Formaldehydharz ausgewählt ist aus der Gruppe von Harnstoff-Formaldehydharzen, Phenol-Formaldehydharzen, Resorzin-Formaldehydharzen, formaldehydarmen Polykondensationsharzen und deren Mischungen, insbesondere Harnstoff-Formaldehydharzen.

**In** Bezug auf die Zusammensetzung der Schichten 2,3 der erfindungsgemäßen Holzwerkstoffplatte 1 hat es sich außerdem bewährt, wenn die mindestens einen Holzwerkstoff und das biogene Hauptkomponenten enthaltende Bindemittel aufweisende Schicht 2 der Holzwerkstoffplatte das biogene Hauptkomponenten enthaltende Bindemittel in Mengen in einem Bereich von 5 bis 25 Gew.-%, insbesondere 8 bis 20 Gew.-%, vorzugsweise 10 bis 15 Gew.-%, bezogen auf die Menge absolut trockenen Holzwerkstoffs in der Schicht, enthält. Die mindestens einen Holzwerkstoff und das zweite Bindemittel aufweisende Schicht 3 der Holzwerkstoffplatte enthält das zweite Bindemittel vorzugsweise in Mengen in einem Bereich von 1 bis 15 Gew.-%, insbesondere 3 bis 10 Gew.-%, vorzugsweise 4 bis 7 Gew.-%, bezogen auf die Menge absolut trockenen Holzwerkstoffs in der Schicht.

Die Holzwerkstoffplatte 1 zeichnet sich vorteilhaft durch eine Rohdichte in einem Bereich von 400 bis 950 kg/m³, insbesondere 400 bis 800 kg/m³, vorzugsweise 500 bis 750 kg/m³, bevorzugt 600 bis 700 kg/m³, besonders bevorzugt 625 bis 675 kg/m³, aus. Die Rohdichte der Holzwerkstoffplatte wird bestimmt nach der Norm EN 323:1993.

Weiter weist die Holzwerkstoffplatte 1 vorzugsweise eine Biegefestigkeit in einem Bereich von 3 bis 25 N/mm², insbesondere 5 bis 20 N/mm², vorzugsweise 6 bis 17 N/mm², bevorzugt 6,5 bis 15 N/mm², auf. Die Biegefestigkeit wird dabei bestimmt nach der Norm EN 310:1993. Zudem ist es bevorzugt, wenn die Holzwerkstoffplatte ein Biege-Elastizitätsmodul in einem Bereich von 750 bis 3000 N/mm², insbesondere 1000 bis 2750 N/mm², vorzugsweise 1250 bis 2500 N/mm², bevorzugt 1500 bis 2250 N/mm², aufweist. Das Biege-Elastizitätsmodul wird nach der Norm EN 310:1993 bestimmt.

Die Querzugfestigkeit der Holzwerkstoffplatte liegt vorteilhaft in einem Bereich von 0,05 bis 1,6 N/mm², insbesondere 0,1 bis 1,2 N/mm², vorzugsweise 0,1 bis 0,75 N/mm², bevorzugt 0,15 bis 0,6 N/mm², besonders bevorzugt 0,2 bis 0,55 N/mm², aufweist. Die Querzugfestigkeit der wird bestimmt nach der Norm EN 319:1993.

Die Holzwerkstoffplatte 1 kann vorteilhaft als Spanplatte, Faserplatt oder OSB-Platte ausgebildet sein, je nach Holzwerkstoff, der für die Platte verwendet wird. Gleichmaßen kann die Platte 1 auch als Basis für eine Verbundplatte dienen, für welche die Holzwerkstoffplatte 1 vorteilhaft zusätzlich noch mit einer weiteren Materiallage, insbesondere einer Dekor- und/oder Funktionslage, vorzugsweise ausgewählt aus Dekorplatten, Dekorlaminaten, HP-Platten und/oder HP-Laminaten, ausgestattet wird.

Eine bevorzugte Ausführungsform der erfindungsgemäßen Holzwerkstoffplatte 1 mit einem dreischichtigen Aufbau ist in Fig. 2 gezeigt. Die Holzwerkstoffplatte 1 umfasst dabei eine erste Schicht 2, eine zweite Schicht 3 sowie eine weitere Schicht 4. Die Schichten 2 und 4 sind vorteilhaft als Deckschichten und die Schicht 3 vorzugsweise als Mittelschicht ausgebildet.

Die erste Schicht 2 der Holzwerkstoffplatte weist dabei mindestens einen Holzwerkstoff und das erste, biogene Hauptkomponenten enthaltende Bindemittel auf. Die zweite Schicht 3 der Holzwerkstoffplatte 1 weist mindestens einen Holzwerkstoff und das zweites, von dem ersten Bindemittel unterschiedliche, Bindemittel auf. Die weitere Schicht 4 weist ebenfalls mindestens einen Holzwerkstoff sowie ein weiteres Bindemittel auf.

Das weitere Bindemittel der Schicht 4 kann vorteilhaft auch, insbesondere ausschließlich, biogene Hauptkomponenten enthalten, insbesondere wobei sich das weitere Bindemittel im Hinblick auf die biogenen Komponenten oder die Zusammensetzung des Bindemittels insgesamt vom Bindemittel der Schicht 2 unterscheiden kann. Es kann jedoch auch sein, dass das gleiche Bindemittel, wie für die Schicht 2, verwendet wird.

Besonders bevorzugt kann es außerdem vorgesehen sein, dass die Schicht 4 insgesamt die gleiche Zusammensetzung wie die Schicht 2 in Bezug auf das Bindemittel und den Holzwerkstoff aufweist. Im Wesentlichen entspricht die Schicht 4 in diesem bevorzugten Fall dann der Schicht 2.

Alternativ kann es auch vorgesehen sein, dass das Bindemittel der Schicht 4 ein Harz, bspw. ein formaldehydhaltiges Harz, umfasst oder auch einen Dispersionsleim, etwa auf Polyvinylacetat-Basis. Die Auswahl des Bindemittels der weiteren Schicht 4 richtet sich vorteilhaft nach dem Einsatzzweck der Holzwerkstoffplatte 1, wobei Ausführungen der Holzwerkstoffplatte, die emissionsarm und unter Gesundheitsaspekten positiv zu bewerten sind, bevorzugt sind.

Für die Ausführungsform der Holzwerkstoffplatte 1 gemäß der Fig. 2 hat es sich weiter bewährt, wenn der Holzwerkstoff der zweiten, insbesondere als Mittelschicht ausgebildeten, Schicht 3 eine geringere Dichte aufweist als der Holzwerkstoff der ersten, insbesondere als Deckschicht ausgebildeten, Schicht 2 sowie der weiteren, insbesondere als Deckschicht ausgebildeten, Schicht 4.

So kann es auch vorgesehen sein, dass in der ersten Schicht 2 und der weiteren Schicht 4 je ein Holzwerkstoff in Form von Holzspänen oder Holzfasern verwendet wird, der, bezogen auf die Größe der Späne oder Fasern, kleiner ist als der Holzwerkstoff, der in der Schicht 3 verwendet wird. Entsprechend kann der Holzwerkstoff der Schichten 2 und 4 dichter gestreut werden bzw. eine dichtere Schicht ausbilden als der gröbere Holzwerkstoff der Schicht 3, der vorzugsweise loser gestreut wird. So kann eine gewichts- und materialoptimierte Holzwerkstoffplatte erhalten werden.

Vorteilhaft kann es auch sein, dass die Schichten 2 und 4 der Holzwerkstoffplatte 1, bezogen auf ihre Dicken, dünner bzw. schmaler ausgebildet sind, als die Schicht 3, so dass ein Aufbau erhalten wird, der zwei, insbesondere als Deckschichten ausgebildete, vergleichsweise dünne Schichten 2 und 4 sowie eine vergleichsweise dicke Schicht 3 vorsieht.

Alternativ ist es jedoch gleichermaßen bevorzugt möglich, dass die Schichten 2, 3 und 4 jeweils gleich dick ausgebildet sind.

Eine weitere bevorzugte Ausführung einer erfindungsgemäße Holzwerkstoffplatte mit einem dreischichtigen Aufbau im Querschnitt ist in Fig. 3 gezeigt.

Die erfindungsgemäße Platte 1 umfasst dabei zwei erste Schichten 2 sowie eine zweite Schicht 3, wobei die erste Schicht 2 ein biogene Hauptkomponenten enthaltendes Bindemittel aufweist, insbesondere als alleiniges Bindemittel, und die zweite Schicht 3 das zweite, von dem ersten Bindemittel unterschiedliche Bindemittel umfasst.

Vorteilhaft für diese Ausführungsform ist, dass die insbesondere als Deckschichten ausgebildeten Schichten 2 aus dem gleichen Holzwerkstoff und dem gleichen Bindemittel gebildet sind, was die Herstellung der Platte 1 insgesamt vereinfacht. Die zweite Schicht 3 umfasst einen in Bezug auf die erste Schicht gleichen oder auch von dieser unterschiedlichen Holzwerkstoff. Vorteilhaft kann sich der Holzwerkstoff etwa im Hinblick auf die Größe der Späne bzw. Fasern vom Holzwerkstoff der Schichten 2 unterscheiden. In diesem Fall kann es außerdem vorgesehen sein, dass die Schichten 2 schmaler bzw. dünner ausgebildet sind als die Schicht 3. Gleichmaßen hat es sich bewährt, wenn die Schichten 2 einen geringeren Gewichtsanteil an der Holzwerkstoffplatte 1 als die Schicht 3, bezogen je auf die einzelne Schicht, aufweisen.

Das Bindemittel der Schicht 3 ist vorteilhaft ein Harz, vorzugsweise ein formaldehydhaltiger Harz.

Schließlich zeigt Fig. 4 eine weitere bevorzugte Ausführung der vorliegenden Erfindung, wobei die erfindungsgemäße Holzwerkstoffplatte 1 in eine Verbundplatte 5 mit einem insgesamt vierschichtigen Aufbau integriert ist.

Die Holzwerkstoffplatte 1 ist entsprechend der bevorzugten Ausgestaltung gemäß Fig. 3 ausgebildet, wobei auch sämtliche weiteren beschriebenen Ausführungen der Holzwerkstoffplatte 1 für die Verbundplatte 5 verwendet werden können.

Was die Dekorschicht 5 anbelangt, so kann diese vielfältig gestaltet sein, insbesondere im Hinblick auf Farbe, Struktur, Maserung und/oder Musterung der Dekor- bzw. Funktionslagenoberflache sowie auch im Hinblick auf die Materialbeschaffenheit, -dicke und/oder -ausrüstung, mittels welcher dann auch das Eigenschaftsprofil der Erfindungsgemäßen Verbundplatte noch erweitert werden kann.

Es können also bunte, einfarbige oder gemusterte Dekore ebenso verwendet werden wie Dekore, die Holzmaserungen, Kachelmuster oder Bildbestandteile umfassen, oder auch Funktionen beinhalten, wie eine schmutzabweisende Wirkung, eine hohe Mattigkeit oder einen besonderen Glanz.

Die Dekorschicht 5 kann dabei bspw. auf die Holzwerkstoffplatte 1 gepresst, laminiert, geklebt und/oder geschweißt sein, wofür die Holzwerkstoffplatte 1 vorteilhaft jeweils problemlos geeignet ist.

### Ausführungsbeispiel:

Beschrieben ist die Herstellung einer erfindungsgemäßen Holzwerkstoffplatte mit dreischichtigem Aufbau:
Zunächst wird der Holzwerkstoff, insbesondere etwa in Form von Holzspänen, bereitgestellt. Der Holzwerkstoff liegt dabei in getrockneter sowie auch fraktionierter Form vor.

Nachfolgend wird der bereitgestellte Holzwerkstoff, der für die zwei als Deckschichten ausgebildeten ersten Schichten vorgesehen ist, mit dem biogenen Hauptkomponenten enthaltenden Bindemittel vermengt und gemischt. Der Beleimungsgrad des Holzwerkstoffs beträgt für die ersten Schichten 12 %, bezogen auf die Menge absolut trockenen Holzwerkstoffes. Das Bindemittel umfasst dabei eine biogenen Hauptkomponente in Form einer Mischung aus proteinhaltigen Hauptkomponenten pflanzlichen und tierischen Ursprungs. Die Hauptkomponenten tierischen Ursprungs ist dabei Hämoglobin. Die Hauptkomponenten pflanzlichen Ursprungs basiert auf Soja. Das Bindemittel enthält das Hämoglobin in Mengen von 20 bis 30 Gew.-% und Soja in Mengen von 15 bis 20 Gew.-%.

Getrennt hiervon wird der Holzwerkstoff, der für die als Mittelschicht ausgebildete zweite Schicht vorgesehen ist, mit dem weiteren Bindemittel vermengt und gemischt. Der Beleimungsgrad des Holzwerkstoffs für die zweite Schicht beträgt 6,8 %, bezogen auf die Menge absolut trockenen Holzwerkstoffes. Das weitere Bindemittel ist ein Harnstoff-Formaldehydharz.

Die zwei Fraktionen des mit dem Bindemittel versehenen Holzwerkstoffs werden nachfolgend auf der Streustraße zu gleichmäßigen Lagen aus erster Deckschicht, gefolgt von der Mittelschicht und abschließend der zweiten Deckschicht gestreut. Gegenebenfalls können auch Trennmittel oder weitere Additive auf die Holzwerkstofflangen aufgesprüht werden. Die Holzwerkstofflagen bzw. -schichten werden so gestreut, dass eine Rohdichte von 660 kg/m³ erhalten wird. Der Anteil der Deckschichten an den gestreuten Holzwerkstoffschichten beträgt dabei 35 %, der Anteil der Mittelschicht liegt bei 65 %.

Im nächsten Schritt folgt das Pressen der Holzwerkstoffschichten zur Holzwerkstoffplatte unter Einwirkung von Druck und Temperatur. Der Pressvorgang wird dabei in einer Presse mit fünf Press- bzw. Heizzonen durchgeführt. Es wird ein Presszeitfaktor von 3,8 bis 4,5 s/mm aufgewendet. In den Presszonen 1 und 2 wird ein Pressdruck von 3,2 N/mm² ausgeübt. In den nachfolgenden Presszonen wird der Pressdruck sukzessive verringert auf 2,5 bis 0,5 N/mm². Die Temperaturen, die in der Presse eingestellt sind, liegen für die Heizzonen 1 und 2 bei 245 °C, in Zone 3 bei 250 °C, in Zone 4 bei 215 °C und in Zone 5 bei 190 °C.

Nach dem Pressen werden die erhaltenen Holzwerkstoffplatten weiter vorformatiert, in einem Kühlstrom bis zum Erreichen der Lagertemperatur konditioniert, kalibriert, final formatiert sowie abschließend für die weitere Verwendung gestapelt und verpackt.

Erhalten wird eine robust sowie mechanisch als auch witterungsstabile Holzwerkstoffplatte mit einem gegenüber konventionellen Platten verringerten Anteil an Formaldehydharz sowie einem deutlich gesteigerten Anteil an nachwachsenden sowie wertschöpfend verwerteten Ausgangsmaterialien. Die Platte zeichnet sich durch eine äußerst geringe bzw. insbesondere so gut wie nicht feststellbare Formaldehydemission aus. Entsprechend ist die Holzwerkstoffplatte optimal geeignet für den Einsatz in Wohnräumen und trägt nachhaltig zu einem guten bzw. als gesund zu bewertenden Raumklima bei.

**Bezugszeichenliste:**

| | | | |
|---|---|---|---|
| 1 | Holzwerkstoffplatte | 4 | weitere Schicht |
| 2 | erste Schicht | 5 | Dekorschicht |
| 3 | zweite Schicht | | |

## Patentansprüche

1. Holzwerkstoffplatte mit einem mindestens zweischichtigen Aufbau, enthaltend mindestens einen Holzwerkstoff und mindestens zwei Bindemittel, wobei eine erste Schicht der Holzwerkstoffplatte mindestens einen Holzwerkstoff und ein erstes Bindemittel aufweist, und eine zweite Schicht der Holzwerkstoffplatte mindestens einen Holzwerkstoff und ein zweites, von dem ersten Bindemittel unterschiedliches, Bindemittel aufweist,
**dadurch gekennzeichnet,**
**dass** mindestens eines der mindestens zwei Bindemittel ausschließlich biogene Hauptkomponenten enthält, und dass das biogene Hauptkomponenten enthaltende Bindemittel in der ersten oder zweiten Schicht der Holzwerkstoffplatte als alleiniges Bindemittel enthalten ist, wobei das biogene Hauptkomponenten enthaltende Bindemittel eine Mischung biogener Hauptkomponenten pflanzlichen und tierischen Ursprungs enthält, wobei das Bindemittel die biogene Hauptkomponente tierischen Ursprungs in Mengen in einem Bereich von 10 bis 50 Gew.-% und die biogene Hauptkomponente pflanzlichen Ursprungs in Mengen in einem Bereich von 5 bis 45 Gew.-%, jeweils bezogen auf die Bindemittelzusammensetzung, enthält, und die biogenen Hauptkomponenten tierischen und pflanzlichen Ursprungs in dem Bindemittel in Mengenanteilen in einem Bereich von 70 : 30 bis 50 : 50, bezogen auf das Bindemittel, enthalten sind.

2. Holzwerkstoffplatte nach Anspruch 1, **dadurch gekennzeichnet, dass** das biogene Hauptkomponenten enthaltende Bindemittel frei von formaldehydhaltigen Bestandteilen ist.

3. Holzwerkstoffplatte nach Anspruch 1 oder 2, **dadurch gekennzeichnet, dass** das biogene Hauptkomponenten enthaltende Bindemittel, insbesondere ausschließlich, in der ersten Schicht der Holzwerkstoffplatte enthalten ist.

4. Holzwerkstoffplatte nach einem der vorangehenden Ansprüche, **dadurch gekennzeichnet, dass** die erste Schicht als Deckschicht ausgebildet ist.

5. Holzwerkstoffplatte nach einem der vorangehenden Ansprüche, **dadurch gekennzeichnet, dass** die zweite Schicht als Mittelschicht ausgebildet ist.

6. Holzwerkstoffplatte nach einem der vorangehenden Ansprüche, **dadurch gekennzeichnet, dass** die Holzwerkstoffplatte einen mindestens dreischichtigen Aufbau aufweist, wobei die Holzwerkstoffplatte zwei, insbesondere als Deckschichten ausgebildete, erste Schichten umfasst.

7. Holzwerkstoffplatte nach einem der vorangehenden Ansprüche, **dadurch gekennzeichnet, dass** der Holzwerkstoff ausgewählt ist aus lignocellulosehaltigen Spänen und/oder Fasern, insbesondere ausgewählt aus der Gruppe von Laubhölzern, Nadelhölzern, Altholz, Stroh, Bast, Flachs, Hanf, Bagasse, Bambus, Pflanzenschrot, Altpapier, Altpappe, Altkarton und deren Mischungen, insbesondere Laubhölzern, Nadelhölzern, Altholz und deren Mischungen.

8. Holzwerkstoffplatte nach einem der vorangehenden Ansprüche, **dadurch gekennzeichnet, dass** die biogene Hauptkomponente eine proteinhaltige Hauptkomponente ist.

9. Holzwerkstoffplatte nach einem der vorangehenden Ansprüche, **dadurch gekennzeichnet, dass** das biogene Hauptkomponenten enthaltende Bindemittel die biogene Hauptkomponente in Mengen in einem Bereich von 25 bis 70 Gew.-%, insbesondere 30 bis 60 Gew.-%, vorzugsweise 35 bis 50 Gew.-%, bezogen auf die Bindemittelzusammensetzung, enthält.

10. Holzwerkstoffplatte nach einem der vorangehenden Ansprüche, **dadurch gekennzeichnet, dass** das zweite Bindemittel ein Harz ist.

11. Spanplatte, umfassend eine Holzwerkstoffplatte nach einem der vorangehenden Ansprüche, insbesondere bestehend hieraus.

12. Faserplatte, umfassend eine Holzwerkstoffplatte nach einem der Ansprüche 1 bis 10, insbesondere bestehend hieraus.

13. OSB-Platte, umfassend eine Holzwerkstoffplatte nach einem der Ansprüche 1 bis 10, insbesondere bestehend hieraus.

14. Verbundplatte, umfassend eine Holzwerkstoffplatte nach einem der Ansprüche 1 bis 10 sowie hierauf aufgebracht mindestens eine weite Materiallage, insbesondere eine Dekor- und/oder Funktionslage, vorzugsweise ausgewählt aus Dekorplatten, Dekorlaminaten, HP-Platten und/oder HP-Laminaten.

15. Verfahren zur Herstellung einer Holzwerkstoffplatte nach einem der Ansprüche 1 bis 10, wobei
a) in einem ersten Schritt mindestens ein erster und ein zweiter Holzwerkstoff bereitgestellt werden, und
b) in einem zweiten Schritt der erste Holzwerkstoff mit dem ersten, biogene Hauptkomponenten enthaltenden Bindemittel gemischt wird, sowie hiervon getrennt der zweite Holzwerkstoff mit dem zweiten, von dem ersten Bindemittel unterschiedlichen, Bindemittel gemischt wird, sowie ggf. hiervon getrennt mindestens ein weiterer Holzwerkstoff mit dem ersten und/oder zweiten und/oder einem weiteren Bindemittel gemischt wird, und
c) in einem dritten Schritt auf einem Träger eine erste Schicht des mit einem der Bindemittel vermischten ersten, zweiten oder ggf. weiteren Holzwerkstoffs gestreut wird, sowie hierauf
eine zweite Schicht des mit einem der Bindemittel vermischten ersten, zweiten oder ggf. weiteren Holzwerkstoffs gestreut wird, sowie ggf. hierauf mindestens eine weitere Schicht des mit einem der Bindemittel vermischten ersten, zweiten oder ggf. weiteren Holzwerkstoffs gestreut wird, und
d) in einem vierten Schritt Holzwerkstoff und Bindemittelzusammensetzung innerhalb der Schichten und die Schichten miteinander unter Einwirkung von Druck und Temperatur zu einer Holzwerkstoffplatte verpresst werden,
wobei das biogene Hauptkomponenten enthaltende Bindemittel in der ersten oder zweiten Schicht der Holzwerkstoffplatte als alleiniges Bindemittel enthalten ist.

## Claims

1. A wood-based board having an at least two-layer structure, comprising at least one wood-based material and at least two binders, wherein a first layer of the wood-based board comprises at least one wood-based material and a first binder, and a second layer of the wood-based board comprises at least one wood-based material and a second binder different from the first binder,
**characterized in**
**that** at least one of the at least two binders contains exclusively biogenic main components, and that the binder containing biogenic main components is present in the first or second layer of the wood-based board as the sole binder, wherein the binder containing the biogenic main components comprises a mixture of biogenic main components of plant and animal origin, wherein the binder contains the biogenic main component of animal origin in amounts ranging from 10 to 50 wt.% and the biogenic main component of plant origin in amounts ranging from 5 to 45 wt.%, in each case based on the binder composition, and the main biogenic components of animal and plant origin are present in the binder in a ratio ranging from 70:30 to 50:50, based on the binder.

2. The wood-based board according to claim 1, **characterized in that** the binder containing the main biogenic components is free of formaldehyde-containing constituents.

3. The wood-based board according to claim 1 or 2, **characterized in that** the binder containing the main biogenic components is contained, in particular exclusively, in the first layer of the wood-based board.

4. The wood-based board according to any of the preceding claims, **characterized in that** the first layer is formed as a top layer.

5. The wood-based board according to any of the preceding claims, **characterized in that** the second layer is formed as a middle layer.

6. The wood-based board according to any of the preceding claims, **characterized in that** the wood-based board has an at least three-layer structure, wherein the wood-based board comprises two first layers, in particular formed as surface layers.

7. The wood-based board according to any of the preceding claims, **characterized in that** the wood material is selected from lignocellulose-containing chips and/or fibers, in particular selected from the group consisting of hardwoods, softwoods, waste wood, straw, raffia, flax, hemp, bagasse, bamboo, plant waste, waste paper, waste cardboard, and mixtures thereof, in particular hardwoods, softwoods, waste wood, and mixtures thereof.

8. The wood-based board according to any of the preceding claims, **characterized in that** the main biogenic component is a protein-containing main component.

9. The wood-based board according to any of the preceding claims, **characterized in that** the binder containing the main biogenic component contains the main biogenic component in amounts ranging from 25 to 70 wt.-%, in particular 30 to 60 wt.-%, preferably 35 to 50 wt.-%, based on the binder composition.

10. The wood-based board according to any of the preceding claims, **characterized in that** the second binder is a resin.

11. A particleboard comprising a wood-based board according to any of the preceding claims, in particular consisting thereof.

12. A fiberboard comprising a wood-based board according to any one of claims 1 through 10, in particular consisting of the same.

13. An OSB board comprising a wood-based board according to any one of claims 1 through 10, in particular consisting thereof.

14. A composite board comprising a wood-based board according to any one of claims 1 through 10, as well as at least one additional material layer applied thereto, in particular a decorative and/or functional layer, preferably selected from decorative panels, decorative laminates, HP panels, and/or HP laminates.

15. A method for manufacturing a wood-based board according to any one of claims 1 through 10, wherein
a) in a first step, at least a first and a second wood-based material are provided, and
b) in a second step, the first wood-based material is mixed with the first binder containing biogenic main components, and, separately from this the second wood-based material is mixed with the second binder, which is different from the first binder, and, if necessary, separately from this
at least one additional wood-based material is mixed with the first and/or second and/or another binder, and
c) in a third step, a first layer of the first, second, or, if applicable, additional wood-based material mixed with one of the binders is spread onto a substrate, and on top of this a second layer of the first, second, or, if applicable, additional wood-based material mixed with one of the binders is spread, and, if applicable, on top of this at least one additional layer of the first, second, or, if applicable, additional wood-based material mixed with one of the binders is spread, and
d) in a fourth step, the wood-based material and the binder composition within the layers, as well as the layers themselves, are pressed together under the influence of pressure and temperature to form a wood-based board,
wherein,
the binder containing biogenic main components is present as the sole binder in the first or second layer of the wood-based board.

## Revendications

1. Panneau à base de bois présentant une structure à au moins deux couches, contenant au moins un matériau à base de bois et au moins deux liants, une première couche du panneau à base de bois comportant au moins un matériau à base de bois et un premier liant, et une deuxième couche du panneau à base de bois comportant au moins un matériau à base de bois et un deuxième liant, différent du premier liant,
**caractérisé en ce**
**qu'**au moins l'un des au moins deux liants contient exclusivement des composants principaux d'origine biogène, et que le liant contenant des composants principaux d'origine biogène est présent dans la première ou la deuxième couche du panneau à base de bois en tant que seul liant, le liant contenant les composants principaux d'origine biogène comprenant un mélange de composants principaux d'origine biogène d'origine végétale et animale, le liant contenant le composant principal d'origine biogène d'origine animale en quantités comprises dans une plage de 10 à 50 % en poids et le composant principal d'origine biogène d'origine végétale en quantités comprises dans une plage de 5 à 45 % en poids, dans chaque cas par rapport à la composition du liant, et les composants principaux biogènes d'origine animale et végétale sont présents dans le liant dans des proportions comprises dans une plage allant de 70 : 30 à 50 : 50, par rapport au liant.

2. Panneau à base de bois selon la revendication 1, **caractérisé en ce que** le liant contenant les composants biogènes principaux est exempt de composants contenant du formaldéhyde.

3. Panneau à base de bois selon la revendication 1 ou 2, **caractérisé en ce que** le liant contenant les composants biogènes principaux est présent, en particulier exclusivement, dans la première couche du panneau à base de bois.

4. Panneau à base de bois selon l'une des revendications précédentes, **caractérisé en ce que** la première couche est conçue comme une couche de finition.

5. Panneau à base de bois selon l'une des revendications précédentes, **caractérisé en ce que** la deuxième couche est conçue comme une couche intermédiaire.

6. Panneau à base de bois selon l'une des revendications précédentes, **caractérisé en ce que** le panneau à base de bois présente une structure à au moins trois couches, le panneau à base de bois comprenant deux premières couches, notamment conçues comme des couches de finition.

7. Panneau à base de bois selon l'une des revendications précédentes, **caractérisé en ce que** le matériau à base de bois est choisi parmi des copeaux et/ou des fibres contenant de la lignocellulose, en particulier choisis parmi le groupe comprenant les feuillus, les conifères, le bois usagé, la paille, du raphia, du lin, du chanvre, de la bagasse, du bambou, des résidus végétaux, du papier usagé, du carton usagé et de leurs mélanges, en particulier des feuillus, des conifères, du bois de récupération et de leurs mélanges.

8. Panneau à base de bois selon l'une des revendications précédentes, **caractérisé en ce que** le composant biogène principal est un composant principal contenant des protéines.

9. Panneau à base de bois selon l'une des revendications précédentes, **caractérisé en ce que** le liant contenant le composant principal biogène contient ce composant principal biogène en quantités comprises dans une plage de 25 à 70 % en poids, en particulier de 30 à 60 % en poids, de préférence de 35 à 50 % en poids, par rapport à la composition du liant.

10. Panneau à base de bois selon l'une des revendications précédentes, **caractérisé en ce que** le deuxième liant est une résine.

11. Panneau de particules comprenant un panneau à base de bois selon l'une des revendications précédentes, en particulier constitué de celui-ci.

12. Panneau de fibres comprenant un panneau à base de bois selon l'une des revendications 1 à 10, en particulier constitué de celui-ci.

13. Panneau OSB comprenant un panneau à base de bois selon l'une des revendications 1 à 10, en particulier constitué de celui-ci.

14. Panneau composite comprenant un panneau à base de bois selon l'une des revendications 1 à 10 ainsi qu'au moins une autre couche de matériau appliquée sur celui-ci, en particulier une couche décorative et/ou fonctionnelle, de préférence choisie parmi les panneaux décoratifs, les stratifiés décoratifs, les panneaux **HP** et/ou les stratifiés HP.

15. Procédé de fabrication d'un panneau à base de bois selon l'une des revendications 1 à 10, dans lequel
a) dans une première étape, au moins un premier et un deuxième matériau à base de bois sont préparés, et
b) dans une deuxième étape, le premier matériau à base de bois est mélangé au premier liant contenant des composants principaux d'origine biogène, et, séparément de ce mélange
le deuxième matériau à base de bois est mélangé au deuxième liant, différent du premier liant, et, le cas échéant, séparément de celui-ci
au moins un autre matériau à base de bois est mélangé avec le premier et/ou le deuxième et/ou un autre liant, et
c) dans une troisième étape, une première couche du premier, du deuxième ou, le cas échéant, d'un autre matériau à base de bois mélangé à l'un des liants est épandue sur un support, puis
une deuxième couche du premier, du deuxième ou, le cas échéant, d'un autre matériau à base de bois mélangé à l'un des liants est épandue, puis, le cas échéant,
au moins une autre couche du premier, du deuxième ou, le cas échéant, d'un autre matériau à base de bois mélangé à l'un des liants est épandue, et
d) dans une quatrième étape, le matériau à base de bois et la composition de liant au sein des couches, ainsi que les couches entre elles, sont pressés sous l'effet de la pression et de la température pour former un panneau à base de bois,
dans lequel,
le liant contenant des composants biogènes principaux est présent dans la première ou la deuxième couche du panneau à base de bois en tant que seul liant.
